# EUROPÄISCHE PATENTANMELDUNG

(11) **EP 3 916 829 A1**
(43) Veröffentlichungstag der Anmeldung: **01.12.2021**
(21) Anmeldenummer: 20181273.2
(22) Anmeldetag: 19.06.2020
(51) Int. Cl.: H01M 2/02, H01M 2/26, H01M 10/052, H01M 10/0583, H01M 10/0587, H01M 2/16

(54) **LITHIUM-IONEN-ZELLE MIT HOHER SPEZIFISCHER ENERGIEDICHTE**

(30) Priorität: 29.05.2020 EP 20177599; 09.06.2020 EP 20179112
(71) Anmelder: VARTA Microbattery GmbH, 73479 Ellwangen Jagst (DE)
(72) Erfinder: ENSLING, David, 73479 Ellwangen (DE); PYTLIK, Edward, 73479 Ellwangen (DE)
(74) Vertreter: Patentanwaltskanzlei Cartagena

(57) **Zusammenfassung**

Bekannt ist eine Lithium-Ionen-Zelle (100), die einen bandförmigen Elektroden-Separator-Verbund (104) mit der Sequenz Anode (120) / Separator (118) / Kathode (130) umfasst, wobei die Anode (120) und die Kathode (130) jeweils einen Stromkollektor (110; 115) mit einem ersten und einen zweiten Rand (110e; 115e) umfassen und die Stromkollektoren jeweils einen Hauptbereich (122, 126), der mit einer Schicht aus dem jeweiligen Elektrodenmaterial (123, 125) beladen ist, sowie einen freien Randstreifen (121, 117), der sich entlang des ersten Rands (110e, 115e) erstreckt und der nicht mit dem Elektrodenmaterial beladen ist, aufweisen. Der Verbund (104) liegt in Form eines Wickels mit zwei endständigen Stirnseiten vor oder ist Bestandteil eines Stapels, der aus zwei oder mehr identischen Elektroden-Separator-Verbünden gebildet ist und gleichfalls zwei endständige Seiten aufweist, und ist, gegebenenfalls mitsamt dem oder den weiteren identischen Elektroden-Separator-Verbünden des Stapels, von einem Gehäuse umschlossen. Die Anode (120) und die Kathode (130) sind innerhalb des Verbunds (104) versetzt angeordnet, so dass der erste Rand (110e) des Anodenstromkollektors aus einer der endständigen Stirnseiten oder Seiten des Stapels und der erste Rand (115e) des Kathodenstromkollektors aus der anderen der endständigen Stirnseiten oder Seiten des Stapels austritt. Die Zelle (100) weist ein metallisches Kontaktelement (101a, 102, 155) auf, mit der einer der ersten Ränder (110e, 115e) in unmittelbarem Kontakt steht und die mit diesem durch Verschweißung verbunden ist. Es wird vorgeschlagen, dass der Separator (118) mindestens ein anorganisches Material umfasst, das seine Widerstandsfähigkeit gegenüber thermischen Belastungen verbessert.

## Beschreibung

Die nachstehend beschriebene Erfindung betrifft eine Lithium-Ionen-Zelle, die einen Elektroden-Separator-Verbund umfasst.

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wiederzu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Die weit verbreiteten sekundären Lithium-Ionen-Zellen basieren auf dem Einsatz von Lithium, welches in Form von Ionen zwischen den Elektroden der Zelle hin und her wandern kann. Die Lithium-Ionen-Zellen zeichnen sich dabei durch eine vergleichsweise hohe Energiedichte aus. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der mit einem Aktivmaterial beschichtet ist. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden einen Elektrodenbinder (z. B. Polyvinylidenfluorid (PVDF) oder ein anderes Polymer, beispielsweise Carboxymethylzellulose) umfassen. Dieser gewährleistet die mechanische Stabilität der Elektroden und häufigauch die Haftung des Aktivmaterials auf den Stromkollektoren. Weiterhin können die Elektroden leitfähigkeitsverbessernde Additive und andere Zusätze enthalten.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen ist der Verbundkörper eben ausgebildet sein, so dass mehrere Verbundkörper flach aufeinander gestapelt werden können. Sehr häufig wird der Verbundkörper aber in Form eines Wickels gebildet oder zu einem Wickel verarbeitet.

In der Regel umfasst der Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter Lithium-Ionen-Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essentiell sein kann. Auch diese Parameter sind für zylindrische Rundzellen, die einen Verbundkörper in Form eines Wickels enthalten, sehr wichtig. Beim Schnellladen von Zellen können aufgrund von Leistungsverlusten Wärmestaus in den Zellen auftreten, die zu massiven thermomechanischen Belastungen und in der Folge zu Verformungen und Beschädigungen der Zellstruktur führen können. Das Risiko besteht verstärkt dann, wenn die elektrische Anbindung der Stromkollektoren über separate elektrische, an die Stromkollektoren geschweißte Ableiterfahnen erfolgt, die axial aus gewickelten Verbundkörpern austreten, da bei starken Belastungen beim Laden oder Entladen eine Erwärmung lokal an diesen Ableiterfahnen auftreten kann.

In der WO 2017/215900 A1 sind Zellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle mindestens eine Kontaktplatte auf, die auf einem der Längsränder derart aufliegt, dasssich eine linienartige Kontaktzone ergibt. Die Kontaktplatte ist mit dem Längsrand entlang der linienartigen Kontaktzone durch Verschweißung verbunden. Dadurch ist es möglich, den Strom kollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden.

Problematisch ist bei den in der WO 2017/215900 A1 beschriebenen Zellen allerdings, dass es sehr schwierig ist, die Längsränder und die Kontaktplatten miteinander zu verschweißen. Im Verhältnis zu den Kontaktplatten weisen die Stromkollektoren der Elektroden eine ausgesprochen geringe Dicke auf. Der Randbereich der Stromkollektoren ist daher mechanisch außerordentlich empfindlich und kann während der Schweißvorgangs unbeabsichtigt niedergedrückt oder niedergeschmolzen werden. Weiterhin kann es beim Anschweißen der Kontaktplatten zu einem Schmelzen von Separatoren des Elektroden-Separator-Verbunds kommen. In Extremfällen können hieraus Kurzschlüsse resultieren.

Der vorliegenden Erfindung lag die Aufgabe zugrunde, Lithium-Ionen-Zellen bereitzustellen, die sich durch eine gegenüber dem Stand der Technik verbesserte Energiedichte sowie eine homogene Stromverteilung möglichst über die gesamte Fläche und Länge ihrer Elektroden auszeichnen und die gleichzeitig hervorragende Charakteristiken bezüglich ihres Innenwiderstands und ihrer passiven Entwärmungsfähigkeiten besitzen. Weiterhin sollen sich die Zellen auch durch eine verbesserte Herstellbarkeit und Sicherheit auszeichnen.

Diese Aufgabe wird durch die nachfolgend beschriebene Lithium-Ionen-Zelle, insbesondere die bevorzugte Ausführungsform der nachfolgend beschriebenen Lithium-Ionen-Zelle mit den Merkmalen des Anspruchs 1, gelöst. Bevorzugte Ausgestaltungen dieser bevorzugten Ausführungsform ergeben sich aus den abhängigen Ansprüchen.

Die erfindungsgemäße Lithium-Ionen-Zelle zeichnet sich stets durch die folgenden Merkmale a. bis i. aus:
a. Die Zelle umfasst einen Elektroden-Separator-Verbund mit der Sequenz Anode / Separator / Kathode, bevorzugt einen bandförmigen Elektroden-Separator-Verbund mit der Sequenz Anode / Separator / Kathode.
b. Die Anode umfasst einen Anodenstromkollektor mit einem ersten und einem zweiten Rand, bevorzugt einen bandförmigen Anodenstromkollektor mit einem ersten und einem zweiten Längsrand und zwei Endstücken.
c. Der Anodenstromkollektor weist
   - einen Hauptbereich, der mit einer Schicht aus negativem Elektrodenmaterial beladen ist, bevorzugt einen bandförmigen Hauptbereich, der mit einer Schicht aus dem negativen Elektrodenmaterial beladen ist, sowie
   - einen freien Randstreifen, der sich entlang des ersten Rands des Anodenstromkollektors, insbesondere entlang des ersten Längsrands des Anodenstromkollektors, erstreckt und der nicht mit dem Elektrodenmaterial beladen ist, auf.
d. Die Kathode umfasst einen Kathodenstromkollektor mit einem ersten und einem zweiten Rand, bevorzugt einen bandförmigen Kathodenstromkollektor mit einem ersten und einem zweiten Längsrand und zwei Endstücken.
e. Der Kathodenstromkollektor weist
   - einen Hauptbereich, der mit einer Schicht aus positivem Elektrodenmaterial beladen ist, bevorzugt einen bandförmigen Hauptbereich, der mit einer Schicht aus dem positiven Elektrodenmaterial beladen ist, sowie
   - einen freien Randstreifen, der sich entlang des ersten Rands des Kathodenstromkollektors, insbesondere entlang des ersten Längsrands des Kathodenstromkollektors, erstreckt und der nicht mit dem Elektrodenmaterial beladen ist, auf.
f. Der Elektroden-Separator-Verbund liegt in Form eines Wickels mit zwei endständigen Stirnseiten vor oder ist Bestandteil eines Stapels, der aus zwei oder mehr identischen Elektroden-Separator-Verbünden gebildet ist und gleichfalls zwei endständige Seiten aufweist.
g. Der Elektroden-Separator-Verbund ist, gegebenenfalls mitsamt dem oder den weiteren identischen Elektroden-Separator-Verbünden des Stapels, von einem Gehäuse umschlossen.
h. Die Anode und die Kathode sind innerhalb des Elektroden-Separator-Verbunds versetzt angeordnet, so dass der erste Rand oder Längsrand des Anodenstromkollektors aus einer der endständigen Stirnseiten oder Seiten des Stapels und der erste Rand oder Längsrand des Kathodenstromkollektors aus der anderen der endständigen Stirnseiten oder Seiten des Stapels austritt.
h. Die Zelle weist ein parallel zur Stirnseite angeordnetes metallisches Kontaktelement, insbesondere eine metallische Kontaktplatte, auf, mit einem der ersten Ränder oder Längsränder, bevorzugt der Länge nach, in unmittelbarem Kontakt steht.
i. Das Kontaktelement, insbesondere die metallische Kontaktplatte, ist mit diesem Rand oder Längsrand durch Verschweißung verbunden.

Besonders bevorzugt umfasst die Zelle zwei Kontaktelemente, insbesondere zwei metallische Kontaktplatten, von denen eine mit dem ersten Rand oder Längsrand des Anodenstromkollektors und die andere mit dem ersten Rand oder Längsrand des Kathodenstromkollektors in unmittelbarem Kontakt steht, wobei die Kontaktelemente und die damit in Kontakt stehenden Ränder oder Längsränder jeweils durch Verschweißung miteinander verbunden sind.

Die Stromkollektoren dienen dazu, im Elektrodenmaterial enthaltene elektrochemisch aktive Komponenten möglichst großflächig elektrisch zu kontaktieren. Bevorzugt bestehen die Stromkollektoren als einem Metall oder sind zumindest oberflächlich metallisiert. Als Metall für den Anodenstromkollektor eignen sich beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich beispielsweise Aluminium oder auch andere elektrisch leitfähige Materialien, insbesondere auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offen porige Schäume oder Streckmetalle verwendet werden.

Die Stromkollektoren sind bevorzugt beidseitig mit dem jeweiligen Elektrodenmaterial beladen.

In den freien Randstreifen ist das Metall des jeweiligen Stromkollektors frei von dem jeweiligen Elektrodenmaterial. Bevorzugt ist das Metall des jeweiligen Stromkollektors dort unbedeckt, so dass es fürelektrische Kontaktierungen, beispielsweise durch Verschweißung, zur Verfügung steht.

Besonders bevorzugt ist die erfindungsgemäße Lithium-Ionen-Zelle eine sekundäre Lithium-Ionen-Zelle.

Für Anode und Kathode der Zelle können im Grunde sämtliche für sekundäre Lithium-Ionen-Zellen bekannten Elektrodenmaterialien verwendet werden.

In der negativen Elektrode können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform.

Besonders zeichnet sich die erfindungsgemäße Zelle durch das unmittelbar folgende Merkmalj. aus:
j. Der Separator umfasst mindestens ein anorganisches Material, das seine Widerstandsfähigkeit gegenüber thermischen Belastungen verbessert.

Dieses Material schützt den Separator vor einer Schrumpfung in Folge einer lokalen Erwärmung, wie sie insbesondere beim Anschweißen der Kontaktelemente, insbesondere der Kontaktplatten, auftreten kann. Das Risiko eines Kurzschlusses wird so beträchtlich vermindert.

In einer bevorzugten Weiterbildung zeichnet sich die erfindungsgemäße Zelle durch mindestens eines der unmittelbar folgenden Merkmale a. bis c. aus:
a. Der Elektroden-Separator-Verbund umfasst einen ersten Separator und einen zweiten Separator.
b. Der erste Separator und der zweite Separator sind identisch ausgebildet.
c. Der Elektroden-Separator-Verbund weist die Sequenz Anode / erster Separator / Kathode / zweiter Separator oder die Sequenz erster Separator / Anode / zweiter Separator / Kathode auf.

Es ist besonders bevorzugt, dass die unmittelbar vorstehenden Merkmale a. und c., gegebenenfalls auch die unmittelbar vorstehenden Merkmale a. bis c., in Kombination miteinander verwirklicht sind.

Bevorzugt sind sowohl der erste als auch der zweite Separator mittels des mindestens einen anorganischen Materials gegenüber thermischen Belastungen verbessert.

In weiteren möglichen bevorzugten Weiterbildungen zeichnet sich die erfindungsgemäße Zelle durch mindestens eines der unmittelbar folgenden Merkmale a. oder b. aus:
a. Der erste und/oder der zweite Separator ist ein elektrisch isolierendes Flächengebilde, beispielsweise eine Folie oder ein Gewebe oder ein Vlies, insbesondere aus mindestens einem Kunststoff, mit einer Dicke im Bereich von 5 µm bis 50 µm, bevorzugt im Bereich von 10 µm bis 30 µm.
b. Die Ränder des ersten und/oder des zweiten Separators, insbesondere die Längsränder des ersten und/oder des zweiten Separators, bilden die endständigen Seiten des Stapels oder die Stirnseiten des Elektroden-Separator-Verbunds.

Es ist besonders bevorzugt, dass die unmittelbar vorstehenden Merkmale a. und b. in Kombination miteinander verwirklicht sind.

Die obigen Angaben betreffend die bevorzugte Dicke des oder der Separatoren beziehen sich auf die Separatoren einschließlich des anorganischen Materials.

Es ist besonders bevorzugt, dass die aus den endständigen Stirnseiten des Wickels oder Seiten des Stapels austretenden Längsränder oder Ränder des Anodenstromkollektors und/oder des Kathodenstromkollektors nicht mehr als 5000 µm, bevorzugt nicht mehr als 3500 µm, aus den Stirnseiten oder den Seiten herausragen.

Besonders bevorzugt ragt der Rand oder der Längsrand des Anodenstromkollektors aus der Seite des Stapels oder der Stirnseite des Wickels nicht mehr als 2500 µm, besonders bevorzugt nicht mehr als 1500 µm, heraus. Besonders bevorzugt ragt der Rand oder der Längsrand des Kathodenstromkollektors aus der Seite des Stapels oder der Stirnseite des Wickels nicht mehr als 3500 µm, besonders bevorzugt nicht mehr als 2500 µm, heraus.

Die Zahlenangaben zum Überstand des Anodenstromkollektors und/oder des Kathodenstromkollektors beziehen sich auf den freien Überstand, bevor die Seiten oder Stirnseiten mit dem Kontaktelement, insbesondere der Kontaktplatte, in Kontakt gebracht werden. Beim Anschweißen des Kontaktelements, insbesondere der Kontaktplatte, kann es zu Deformationen der Ränder der Stromkollektoren kommen.

Je geringer der freie Überstand gewählt wird, desto breiter können die mit Elektrodenmaterial bedeckten, bevorzugt bandförmigen Hauptbereiche der Stromkollektoren ausgebildet werden. Dies kann positiv zur Energiedichte der erfindungsgemäßen Zelle beitragen.

Wenn der Elektroden-Separator-Verbund in Form eines Wickels mit zwei endständigen Stirnseiten vorliegt, ist es bevorzugt, dass der Separator bandförmig ausgebildet ist, insbesondere einen ersten und einen zweiten Längsrand sowie zwei Endstücke aufweist.

In einer bevorzugten Weiterbildung zeichnet sich die erfindungsgemäße Zelle durch das unmittelbar folgende Merkmal a. aus:
a. Das mindestens eine anorganische Material ist als partikuläres Füllmaterial in dem Separator, insbesondere dem ersten Separator und/oder dem zweiten Separator, enthalten.

Bei dem Separator kann es sich also bevorzugt um eine elektrisch isolierende Kunststofffolie handeln, in die das partikuläre Füllmaterial eingelagert ist. Es ist bevorzugt, dass die Kunststofffolie von dem Elektrolyten durchdrungen werden kann, beispielsweise weil sie Mikroporen aufweist. Die Folie kann beispielsweise aus einem Polyolefin oder aus einem Polyetherketon gebildet sein. Nicht ausgeschlossen ist, dass auch Vliese und Gewebe aus solchen Kunststoffmaterialien zum Einsatz kommen können.

Der Anteil an dem partikulären Füllmaterial in dem Separator beträgt bevorzugt mindestens 40 Gew.-%, besonders bevorzugt mindestens 60 Gew.-%.

In einer weiteren bevorzugten Weiterbildung zeichnet sich die erfindungsgemäße Zelle durch das unmittelbar folgende Merkmal a. aus:
a. Das mindestens eine anorganische Material liegt als Beschichtung auf einer Oberfläche des Separators, insbesondere des ersten Separators und/oder des zweiten Separators, vor.

Bei dem Separator kann es sich also bevorzugt auch um eine Kunststofffolie oder ein Vlies oder ein Gewebe oder ein sonstiges elektrisch isolierendes Flächengebilde handeln, die oder das mit dem partikulären Füllmaterial beschichtet ist.

In diesem Fall werden bevorzugt Separatoren eingesetzt, die eine Basisdicke im Bereich von 5 µm bis 20 µm, bevorzugt im Bereich von 7 µm bis 12 µm, aufweisen. Die Gesamtdicke der Separatoren ergibt sich aus der Basisdicke und der Dicke der Beschichtung.

In einigen Ausführungsformen ist nur eine Seite des Flächengebildes, insbesondere der Kunststofffolie, mit dem anorganischen Material beschichtet. In weiteren Ausführungsformen ist das Flächengebilde, insbesondere die Kunststofffolie, bevorzugt beidseitig mit dem anorganischen Material beschichtet.

Die Dicke der Beschichtung liegt bevorzugt im Bereich von 0,5 µm bis 5 µm. Hieraus ergibt sich, dass die Gesamtdicke der Separatoren im Fall einer beidseitigen Beschichtung bevorzugt im Bereich von 6 µm bis 30 µm, besonders bevorzugt im Bereich von 8 µm bis 22 µm, liegt. Im Falle einer einseitigen Beschichtung liegt die Dicke bevorzugt im Bereich von 5,5 µm bis 20,5 µm, besonders bevorzugt im Bereich von 7,5 µm bis 17 µm.

Gegebenenfalls kann es auch bevorzugt sein, dass die verwendeten Separatoren ein anorganisches Material als Füllstoff und das gleiche oder ein anderes anorganisches Material als Beschichtung umfassen.

In weiteren möglichen bevorzugten Weiterbildungen zeichnet sich die erfindungsgemäße Zelle durch mindestens eines der unmittelbar folgenden Merkmale a. bis e. aus:
a. Das mindestens eine anorganische Material ist oder umfasst ein elektrisch isolierendes Material.
b. Das mindestens eine anorganische Material ist oder umfasst mindestens ein Material aus der Gruppe mit keramischem Material, glaskeramischem Material und Glas.
c. Das mindestens eine anorganische Material ist oder umfasst ein Lithiumionen leitendes keramisches Material, beispielsweise Li₅AlO₄*Li₄SiO₄ oder LiAlSi₂O₆.
d. Das mindestens eine anorganische Material ist oder umfasst ein oxidisches Material, insbesondere ein Metalloxid.
e. Bei dem keramischen oder dem oxidischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂) oder um Titancarbonitrid (TiCN).

Es ist besonders bevorzugt, dass die unmittelbar vorstehenden Merkmale a. bis c. oder die unmittelbar vorstehenden Merkmale a. und b. und d. oder die unmittelbar vorstehenden Merkmale a. und b. und e. in Kombination miteinander verwirklicht sind.

Unter den genannten Materialien sind als Beschichtungsmaterialien Aluminiumoxid (Al₂O₃), Titanoxid (TiO₂) und Siliziumdioxid (SiO₂) besonders bevorzugt.

In weiteren möglichen bevorzugten Weiterbildungen zeichnet sich die erfindungsgemäße Zelle durch mindestens eines der unmittelbar folgenden Merkmale a. bis c. aus:
a. Der erste Separator und/oder der zweite Separator umfasst das mindestens eine anorganische Material lediglich bereichsweise.
b. Der erste Separator und/oder der zweite Separator weist entlang des ersten und/oder des zweiten Längsrands einen Randstreifen auf, in dem er das mindestens eine anorganische Material als Beschichtung und/oder als partikuläres Füllmaterial umfasst.
c. Der erste Separator und/oder der zweite Separator weist einen vorzugsweise bandförmigen Hauptbereich auf, in dem er frei von dem mindestens einen anorganischen Material ist.

Es ist besonders bevorzugt, dass die unmittelbar vorstehenden Merkmale a. bis c. in Kombination miteinander verwirklicht sind.

Es ist keinesfalls zwingend erforderlich, dass der Separator das anorganische Material in homogener Verteilung umfasst oder gleichmäßig und überall mit dem Material beschichtet ist. Vielmehr kann es sogar bevorzugt sein, dass der Separator in bestimmten Bereichen, beispielsweise in dem erwähnten Hauptbereich, frei von dem anorganischen Material ist. In diesem Bereich wird eine erhöhte thermische Beständigkeit des Separators nicht so sehr benötigt wie an den Rändern des Separators. Darüber hinaus kann das anorganische Material insbesondere in diesem Bereich zu einer ungewollten Erhöhung des Innenwiderstands der erfindungsgemäßen Zelle beitragen.

### Schutz der Ränder der Stromkollektoren

In einigen Ausführungsformen kann das Metall des jeweiligen Stromkollektors in den freien Randstreifen aber auch mit einem Stützmaterial beschichtet sein, das thermisch beständiger als der damit beschichtete Stromkollektor ist und das sich von dem auf dem jeweiligen Stromkollektor angeordneten Elektrodenmaterial unterscheidet.

"Thermisch beständiger" soll hierbei bedeuten, dass das Stützmaterial bei einer Temperatur, bei der das Metall des Stromkollektors schmilzt, einen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Bevorzugt weisen sowohl der Anodenstromkollektor als auch der Kathodenstromkollektor jeweils entlang des ersten Rands, bevorzugt entlang des ersten Längsrands, einen freien Randstreifen auf, der nicht mit dem jeweiligen Elektrodenmaterial beladen ist. In einer Weiterbildung ist es bevorzugt, dass sowohl der mindestens eine freie Randstreifen des Anodenstromkollektors als auch der mindestens eine freie Randstreifen des Kathodenstromkollektors mit dem Stützmaterial beschichtet sind. Besonders bevorzugt wird für jeden der Bereiche das gleiche Stützmaterial verwendet.

Das im Rahmen der vorliegenden Erfindungeinsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Lithium-Ionen-Zelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂), oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materialien.

Der Begriff elektrisch isolierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieserVerbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oderTitanoxid ist.

Es kann weiterhin bevorzugt sein, dass freie Randstreifen des Anoden- und/oder des Kathodenstromkollektors mit einem Streifen aus dem Stützmaterial beschichtet sind.

Die Hauptbereiche, insbesondere die bandförmigen Hauptbereiche von Anodenstromkollektor und Kathodenstromkollektor, erstrecken sich bevorzugt parallel zu den jeweiligen Rändern oder Längsrändern der Stromkollektoren. Bevorzugt erstrecken sich die bandförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial unmittelbar neben den bevorzugt bandförmigen Hauptbereichen aufgebracht, bedeckt die freien Bereiche dabei jedoch nicht vollständig. Beispielsweise wird es in Form eines Streifens oder einer Linie entlang eines Rands von Anoden- und/oder Kathodenstromkollektor, insbesondere eines Längsrands von Anoden- und/oder Kathodenstrom kollektor, aufgebracht, so dass es den jeweiligen Randstreifen nur teilweise bedeckt. Unmittelbar entlang dieses Rands oder Längsrands kann dabei ein langgestreckter Teilbereich des freien Randstreifens unbedeckt bleiben.

Es kann entsprechend bevorzugt sein, dass sich die erfindungsgemäße Zelle durch mindestens eines der unmittelbar folgenden Merkmale a. bis c. auszeichnet:
a. Der freie Randstreifen des Anodenstromkollektors und/oder der freie Randstreifen des Kathodenstromkollektors umfasst einen ersten Teilbereich und einen zweiten Teilbereich, wobei der erste Teilbereich mit dem Stützmaterial beschichtet ist, während der zweite Teilbereich unbeschichtet ist.
b. Der erste Teilbereich und der zweite Teilbereich weisen jeweils die Form einer Linie oder eines Streifens auf und verlaufen parallel zueinander.
c. Der erste Teilbereich ist zwischen dem bandförmigen Hauptbereich des Anodenstromkollektors oder des Kathodenstromkollektors und dem zweiten Teilbereich angeordnet.

Es ist besonders bevorzugt, dass die unmittelbar vorstehenden Merkmale a. bis c. in Kombination miteinander verwirklicht sind.

In einer alternativen Ausführungsform kann es bevorzugt sein, dass sich die erfindungsgemäße Zelle durch das unmittelbar folgende Merkmal a. auszeichnet:
a. Der freie Randstreifen des Anodenstromkollektors und/oder der freie Randstreifen des Kathodenstromkollektors ist bis hin zum ersten Längsrand mit dem Stützmaterial beschichtet.

Besonders bevorzugt zeichnet sich die erfindungsgemäße Zelle durch eine Kombination der unmittelbarfolgenden Merkmale a. und b. aus:
a. Der Separator und/oder der Separator umfasst das mindestens eine anorganische Material lediglich bereichsweise.
b. Der Separator und/oder der Separator umfasst das mindestens eine anorganische Material in einem Bereich, der in dem Elektroden-Separator-Verbund eine Grenze zwischen dem Stützmaterial und dem jeweils angrenzenden Elektrodenmaterial abdeckt.

### Bevorzugte Ausgestaltungen der Elektrodenmaterialien und des Elektrolyten

In einigen besonders bevorzugten Ausführungsformen zeichnet sich die erfindungsgemäße Zelle durch das unmittelbar folgende Merkmal a. aus:
a. Das negative Elektrodenmaterial umfasst als Aktivmaterial mindestens ein Material aus der Gruppe mit Silizium, Aluminium, Zinn, Antimon und eine Verbindung oder Legierung dieser Materialien, die Lithium reversibel ein- und auslagern kann, in einem Anteil von 20 Gew.-% bis 90 Gew.-%.

Die Gewichtsangaben beziehen sich hierbei auf die Trockenmasse des negativen Elektrodenmaterials, also ohne Elektrolyt und ohne Berücksichtigung des Gewichts des Anodenstromkollektors.

Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches.

Unter den genannten Aktivmaterialien, die bevorzugt ebenfalls in Form von Partikeln verwendet werden, ist Silizium besonders bevorzugt. Erfindungsgemäß besonders bevorzugt sind entsprechend Zellen, deren negative Elektrode als Aktivmaterial Silizium in einem Anteil von 20 Gew.-% bis 90 Gew.-% enthält.

Auch einige Verbindungen von Silizium, Aluminium, Zinn und/oder Antimon können Lithium reversibel ein- und auslagern. Beispielsweise kann in einigen bevorzugten Ausführungsformen das Silizium in oxidischer Form in der negativen Elektrode enthalten sein. In diesen Ausführungsformen kann es bevorzugt sein, dass die negative Elektrode Siliziumoxid in einem Anteil von 20 Gew.-% bis 90 Gew.-% aufweist.

Das Design der erfindungsgemäßen Zelle ermöglicht einen signifikanten Vorteil. Wie eingangs erwähnt, treten bei Elektroden, bei denen die elektrische Anbindung der Stromkollektoren über die eingangs erwähnten separaten Ableiterfahnen erfolgt, beim Laden und Entladen unmittelbar in der Nähe der Ableiterfahnen größere thermomechanische Belastungen auf als entfernt von den Ableiterfahnen. Dieser Unterschied tritt besonders ausgeprägt bei negativen Elektroden zu Tage, die als Aktivmaterial einen Anteil an Silizium, Aluminium, Zinn und/oder Antimon aufweisen.

Die elektrische Anbindung des oder der Stromkollektoren über Kontaktelemente, insbesondere Kontaktplatten, ermöglicht nicht nur eine vergleichsweise gleichmäßige und effiziente Entwärmung erfindungsgemäßer Zellen, vielmehr werden dadurch auch die beim Laden und Entladen auftretenden thermomechanischen Belastungen gleichmäßig auf den Wickel verteilt. Überraschenderweise ermöglicht dies die Beherrschung sehr hoher Anteile an Silizium und/oder Zinn und/oder Antimon in der negativen Elektrode, bei Anteilen > 50 % treten beim Laden und Entladen vergleichsweise selten oder keine Schäden in Folge der thermomechanischen Belastungen auf. Durch Erhöhung des Anteils an beispielsweise Silizium in der Anode lässt sich die Energiedichte der Zelle stark erhöhen.

Der Fachmann versteht, dass es sich bei dem Zinn, dem Aluminium, dem Silizium und dem Antimon nicht zwingend um Metalle in ihrer Reinstform handeln muss. So können beispielsweise Silizium-Partikel auch Spuren oder Anteile anderer Elemente, insbesondere anderer Metalle (abgesehen von dem ohnehin in Abhängigkeit des Ladezustands enthaltenen Lithiums), aufweisen, beispielsweise in Anteilen von bis zu 40 Gew.-%, insbesondere in Anteilen von bis zu 10 Gew.-%. Es können also auch Legierungen des Zinns, des Aluminiums, des Siliziums und des Antimons eingesetzt werden.

In besonders bevorzugten Ausführungsformen zeichnetsich die erfindungsgemäße Zelle durch mindestens eines der unmittelbar folgenden Merkmale a. und b. aus:
a. Das negative Elektrodenmaterial umfasst als negatives Aktivmaterial weiterhin zur reversiblen Ein- und Auslagerung von Lithium befähigte Partikel auf Kohlenstoffbasis wie beispielsweise graphitischen Kohlenstoff, insbesondere eine Mischung aus dem Silizium und diesen kohlenstoffbasierten Partikeln.
b. Die zur Interkalation von Lithium befähigten Partikel auf Kohlenstoffbasis sind in dem Elektrodenmaterial in einem Anteil von 5 Gew.-% bis 75 Gew.-%, insbesondere in einem Anteil von 15 Gew.-% bis 45 Gew.-%, enthalten.

In weiteren besonders bevorzugten Ausführungsformen zeichnet sich die erfindungsgemäße Zelle durch mindestens eines der unmittelbar folgenden Merkmale a. bis c. aus:
a. Das negative Elektrodenmaterial umfasst einen Elektrodenbinder und/oder ein Leitmittel.
b. Der Elektrodenbinder ist in dem negativen Elektrodenmaterial in einem Anteil von 1 Gew.-% bis 15 Gew.-%, insbesondere in einem Anteil von 1 Gew.-% bis 5 Gew.-%, enthalten.
c. Das Leitmittel ist in dem negativen Elektrodenmaterial in einem Anteil von 0,1 Gew.-% bis 15 Gew.-%, insbesondere in einem Anteil von 1 Gew.-% bis 5 Gew.-%, enthalten.

Es ist besonders bevorzugt, dass die unmittelbar vorstehenden Merkmale a. bis c. in Kombination miteinander verwirklicht sind.

Die Aktivmaterialien sind bevorzugt in eine Matrix aus dem Elektrodenbinder eingebettet, wobei benachbarte Partikel in der Matrix bevorzugt in unmittelbarem Kontakt miteinander stehen.

Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

Im Rahmen der vorliegenden Erfindung ist es besonders bevorzugt, dass das positive Elektrodenmaterial einen PVDF-Binder und das negative Elektrodenmaterial einen Polyacrylat-Binder, insbesondere Lithiumpolyacrylsäure, umfasst.

Für die positive Elektrode kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel Li-NiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden.

Der hohe Gehalt an Silizium in der Anode einer erfindungsgemäßen Zelle bedingt eine entsprechend hochkapazitive Kathode, um eine gute Zellbalance erreichen zu können. Daher sind insbesondere NMC, NCA oder NMCA bevorzugt.

In besonders bevorzugten Ausführungsformen zeichnetsich die erfindungsgemäße Zelle durch mindestens eines der unmittelbar folgenden Merkmale a. bis e. aus:
a. Das positive Elektrodenmaterial umfasst als Aktivmaterial mindestens eine zur reversiblen Ein- und Auslagerung von Lithium befähigte Metalloxidverbindung, bevorzugt eine der vorstehend genannten Verbindungen, insbesondere NMC, NCA oder NMCA.
b. Die mindestens eine oxidische Verbindung ist in dem Elektrodenmaterial in einem Anteil von 50 Gew.-% bis 99 Gew.-%, insbesondere in einem Anteil von 80 Gew.-% bis 99 Gew.-%, enthalten.
c. Das positive Elektrodenmaterial umfasst ebenfalls bevorzugt den Elektrodenbinder und/oder das Leitmittel.
d. Der Elektrodenbinder ist in dem positiven Elektrodenmaterial in einem Anteil von 0,5 Gew.-% bis 15 Gew.-%, besonders bevorzugt in einem Anteil von 1 Gew.-% bis 10 Gew.-% insbesondere in einem Anteil von 1 Gew.-% bis 2 Gew.-% enthalten.
e. Das Leitmittel ist in dem positiven Elektrodenmaterial in einem Anteil von 0,1 Gew.-% bis 15 Gew.-% enthalten.

Es ist besonders bevorzugt, dass die unmittelbar vorstehenden Merkmale a. bis e. in Kombination miteinander verwirklicht sind.

Sowohl im Fall der positiven als auch im Fall der negativen Elektrode ist es bevorzugt, dass sich die prozentualen Anteile der jeweils im Elektrodenmaterial enthaltenen Komponenten auf 100 Gew.-% ergänzen.

Während hochkapazitive Kathoden Lithium reversibel im Bereich von 200 - 250 mAh/g speichern können, liegt die theoretische Kapazität von Silizium bei ca. 3500 mAh/g. Dies führt zu vergleichsweise dicken Kathoden mit hoher Flächenbeladung und sehr dünnen Anoden mit niedriger Flächenbeladung. Da Materialien wie Silizium auf Grund der sehr hohen Kapazität stark auf kleine Spannungsänderungen reagieren, sollte der Anodenstromkollektor so homogen wie möglich beschichtet werden. Bereits kleine Unterschiede in der Beladung des Stromkollektors und/oder der Verdichtung des Elektrodenmaterials können zu starken lokalen Abweichungen in der Elektrodenbalance und/oder Stabilität führen.

Aus diesem Grund zeichnet sich die erfindungsgemäße Zelle in bevorzugten Ausführungsformen durch das unmittelbar folgende Merkmal a. aus:
a. Das Flächengewicht der negativen Elektrode weicht je Flächeneinheit von mindestens 10 cm² um maximal 2 % von einem Mittelwert ab.

Der Mittelwert ergibt sich hierbei als Quotient aus der Summe von mindestens 10 Messergebnissen durch die Anzahl der durchgeführten Messungen.

Weiterhin umfasst die Zelle bevorzugt einen Elektrolyten, beispielsweise auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

In besonders bevorzugten Ausführungsformen zeichnetsich die erfindungsgemäße Zelle durch mindestens eines der unmittelbar folgenden Merkmale a. bis d. aus:
a. Die Zelle umfasst einen Elektrolyten, der eine Mischung aus Tetrahydrofuran (THF) und 2-Methyltetrahydrofuran (mTHF) umfasst.
b. DasVolumenverhältnisvon THF:zu mTHF in der Mischung liegt im Bereich von 2:1 bis 1: 2, besonders bevorzugt beträgt es 1:1.
c. Die Zelle umfasst einen Elektrolyten, der LiPF₆ als Leitsalz umfasst.
d. Das Leitsalz in einem Anteil von 1 bis 2.5 M, insbesondere in einem Anteil von 1 bis 1.5 M, in dem Elektrolyten enthalten.

Besonders bevorzugt zeichnet sich der Elektrolyt der erfindungsgemäßen Zelle durch alle vorstehenden Merkmale a. bis d. aus.

In alternativen besonders bevorzugten Ausführungsformen zeichnet sich die erfindungsgemäße Zelle durch mindestens eines der unmittelbar folgenden Merkmale a. bis e. aus:
a. Die Zelle umfasst einen Elektrolyten, der eine Mischung aus Fluoroethylencarbonat (FEC) und Ethylmethylcarbonat (EMC) umfasst.
b. Das Volumenverhältnis von FEC : zu EMC in der Mischung liegt im Bereich von 1 : 7 bis 5 : 7, besonders bevorzugt beträgt es 3 : 7.
c. Die Zelle umfasst einen Elektrolyten, der LiPF₆ als Leitsalz umfasst.
d. Das Leitsalz ist in einer Konzentration von 1,0 bis 2.0 M, insbesondere von 1,5 M, in dem Elektrolyten enthalten.
e. Der Elektrolyt umfasst Vinylencarbonat (VC), insbesondere in einem Anteil von 1 bis 3 Gew.-%.

Besonders bevorzugt zeichnet sich der Elektrolyt der erfindungsgemäßen Zelle durch alle vorstehenden Merkmale a. bis e. aus.

Zur Verbesserung der Zyklenstabilität wird das Verhältnis der Kapazitäten von Anode zu Kathode der erfindungsgemäßen Zelle vorzugsweise so ausbalanciert, dass die mögliche Kapazität des Siliziums nicht voll ausgenutzt wird.

Besonders bevorzugt zeichnet sich die erfindungsgemäße Zelle durch das unmittelbar folgende Merkmal a. aus:
e. Die Kapazitäten von Anode zu Kathode der erfindungsgemäßen Zelle werden so ausbalanciert, dass im Betrieb je Gramm Elektrodenmaterial der negativen Elektrode lediglich 700-1500 mAh reversibel genutzt werden.

Durch diese Maßnahme lassen sich Volumenänderungen deutlich reduzieren.

Zu betonen ist, dass alle beschriebenen Ausführungsformen, bei denen das negative Elektrodenmaterial als Aktivmaterial mindestens ein Material aus der Gruppe mit Silizium, Aluminium, Zinn, Antimon und eine Verbindung oder Legierung dieser Materialien, die Lithium reversibel ein- und auslagern kann, umfasst, auch völlig unabhängig von Merkmalj. aus Anspruch 1 realisierbar sind. Die Erfindung umfasst somit auch Zellen mit den Merkmalen a. bis i. des Anspruchs 1, bei denen die Anode zwingend einen Anteil von 20 Gew.-% bis 90 Gew.-% Silizium, Aluminium, Zinn und/oder Antimon als Aktivmaterial aufweist, der Separator aber nicht zwingend das mindestens eine anorganische Material, das seine Widerstandsfähigkeit gegenüber thermischen Belastungen verbessert, umfassen muss.

### Bevorzugte Ausgestaltungen der Kontaktelemente

Das Konzept der Verschweißung der Ränder von Stromkollektoren mit Kontaktplatten ist bereits aus der WO 2017/215900 A1 oder aus der JP 2004-119330 A bekannt. Die Verwendung von Kontaktplatten ermöglicht besonders hohe Strombelastbarkeiten und einen geringen Innenwiderstand. Bezüglich Verfahren zur elektrischen Verbindung von Kontaktelementen, insbesondere von Kontaktplatten, mit den Rändern von Stromkollektoren wird daher auf den Inhalt der WO 2017/215900 A1 und der JP 2004-119330 A vollumfänglich Bezug genommen.

Wie bereits oben ausgeführt, sind die Kontaktelemente bevorzugt als Kontaktplatten, also plattenförmig, ausgestaltet.

In einigen bevorzugten Ausführungsformen weist die erfindungsgemäße Zelle mindestens eines der unmittelbar folgenden Merkmale a. und b. auf:
a. Als Kontaktelemente, insbesondere als Kontaktplatten, werden Metallplatten mit einer Dicke im Bereich von 50 µm bis 600 µm, bevorzugt 150 - 350 µm, eingesetzt.
b. Die Kontaktelemente, insbesondere die Kontaktplatten, bestehen aus legiertem oder unlegiertem Aluminium, Titan, Nickel oder Kupfer, aber gegebenenfalls auch aus Edelstahl (beispielsweise vom Typ 1.4303 oder 1.4304) oder aus vernickeltem Stahl.

In einigen Ausführungsformen können Kontaktelemente, insbesondere Kontaktplatten, verwendet werden, die mindestens einen Schlitz und/oder mindestens eine Perforierung aufweisen. Diese dienen dazu, einer Verformung der Platten bei der Herstellung der Schweißverbindung entgegenzuwirken.

Wie unten noch detaillierter ausgeführt wird, kann das Gehäuse, in dem der Elektroden-Separator-Verbund angeordnet ist, zylindrisch oder prismatisch ausgebildet sein.

In Fällen, in denen das Gehäuse zylindrisch ausgebildet ist, werden bevorzugt Kontaktelemente, insbesondere Kontaktplatten, eingesetzt, die die Form einer Scheibe, insbesondere die Form einer kreisförmigen oder zumindest näherungsweise kreisförmigen Scheibe, aufweisen. Sie weisen dann also einen äußeren kreisförmigen oderzumindest näherungsweise kreisförmigen Scheibenrand auf. Unter einer näherungsweise kreisförmigen Scheibe soll hierbei insbesondere eine Scheibe verstanden werden, die die Form eines Kreises mit mindestens einem abgetrennten Kreissegment, bevorzugt mit zwei bis vier abgetrennten Kreissegmenten, aufweist.

In Fällen, in denen das Gehäuse prismatisch ausgebildet ist, werden bevorzugt Kontaktelemente, insbesondere Kontaktplatten, eingesetzt, die eine rechteckige Grundform aufweisen.

In einfacheren Fällen kann das Kontaktelement ein Metallstreifen sein oder mehrere streifenförmige Segmente aufweisen, die beispielsweise in einer sternförmigen Anordnung vorliegen.

In besonders bevorzugten Ausführungsformen bestehen der Anodenstromkollektor und das daran geschweißte Kontaktelement, insbesondere die daran geschweißte Kontaktplatte, beide aus dem gleichen Material. Dieses wird besonders bevorzugt aus der Gruppe mit Kupfer, Nickel, Titan, vernickeltem Stahl und Edelstahl gewählt.

In weiteren besonders bevorzugten Ausführungsformen bestehen der Kathodenstromkollektor und das daran geschweißte Kontaktelement, insbesondere die daran geschweißte Kontaktplatte, beide aus dem gleichen Material. Dieses wird besonders bevorzugt aus der Gruppe mit legiertem oder unlegiertem Aluminium, Titan und Edelstahl (z.B. vom Typ 1.4404) gewählt.

Wie oben erwähnt, weist die erfindungsgemäße Zelle ein metallisches Kontaktelement, insbesondere eine metallische Kontaktplatte, auf, mit der einer der ersten Ränder, insbesondere einem der ersten Längsränder, bevorzugt der Länge nach, in unmittelbarem Kontakt steht. Dadurch bedingt ergibt sich eine linienartige Kontaktzone.

In möglichen bevorzugten Weiterbildungen zeichnet sich die erfindungsgemäße Zelle durch mindestens eines der unmittelbar folgenden Merkmale a. bis c. aus:
a. Der erste Rand des Anodenstromkollektors, insbesondere der erste Längsrand des Anodenstromkollektors, steht mit einem metallischen Kontaktelement, insbesondere einer metallischen Kontaktplatte, bevorzugt der Länge nach, in unmittelbarem Kontakt und ist mit diesem Kontaktelement, insbesondere dieser Kontaktplatte, durch Verschweißung verbunden, wobei zwischen dem Rand oder Längsrand und dem metallischen Kontaktelement, insbesondere der metallischen Kontaktplatte eine linienartige Kontaktzone besteht.
b. Der erste Rand des Kathodenstromkollektors, insbesondere der erste Längsrand des Kathodenstromkollektors, steht mit einem metallischen Kontaktelement, insbesondere einer metallischen Kontaktplatte, bevorzugt der Länge nach, in unmittelbarem Kontakt und ist mit diesem Kontaktelement, insbesondere dieser Kontaktplatte, durch Verschweißung verbunden, wobei zwischen dem Rand oder Längsrand und dem metallischen Kontaktelement, insbesondere der metallischen Kontaktplatte, eine linienartige Kontaktzone besteht.
c. Der erste Rand oder Längsrand des Anodenstromkollektors und/oder der erste Rand oder Längsrand des Kathodenstromkollektors umfasst einen oder mehrere Abschnitte, die jeweils über ihre gesamte Länge über eine Schweißnaht durchgehend mit dem jeweiligen Kontaktelement, insbesondere der jeweiligen Kontaktplatte, verbunden sind.

Die unmittelbar vorstehenden Merkmale a. und b. können sowohl unabhängig voneinander als auch in Kombination realisiert sein. Bevorzugt sind die Merkmale a. und b. allerdings in beiden Fällen in Kombination mit dem unmittelbar vorstehenden Merkmal c. realisiert.

Über die Kontaktelemente ist es möglich, die Stromkollektoren und damit auch die dazugehörige Elektroden vorzugsweise über ihre gesamte Länge elektrisch zu kontaktieren. Gerade dies begünstigt die erwähnte Absenkung des Innenwiderstands innerhalb der erfindungsgemäßen Zelle sehr deutlich. Die beschriebene Anordnung kann das Auftreten großer Ströme somit hervorragend abfangen. Mit minimiertem Innenwiderstand reduzieren sich thermische Verluste bei hohen Strömen. Zudem wird die Abfuhr thermischer Energie aus dem Elektroden-Separator-Verbund begünstigt.

Es gibt mehrere Möglichkeiten, wie die Kontaktelemente mit den Rändern, insbesondere den Längsrändern, verbunden werden können.

Die Kontaktelemente können mit den Rändern oder Längsrändern entlang der linienartigen Kontaktzonen über mindestens eine Schweißnaht verbunden sein. Die Ränder oder Längsränder können also einen oder mehrere Abschnitte umfassen, die jeweils über ihre gesamte Länge über eine Schweißnaht durchgehend mit der oder den Kontaktelementen, insbesondere Kontaktplatten, verbunden sind. Besonders bevorzugt weisen diese Abschnitte eine Mindestlänge von 5 mm, bevorzugt von 10 mm, besonders bevorzugt von 20 mm, auf.

In einer möglichen Weiterbildung erstrecken sich der oder die mit dem Kontaktelement, insbesondere der Kontaktplatte, über ihre gesamte Länge durchgehend verbundenen Abschnitte über mindestens 25 %, bevorzugt über mindestens 50 %, besonders bevorzugt über mindestens 75 %, der Gesamtlänge des jeweiligen Randes oder Längsrandes.

In einigen bevorzugten Ausführungsformen sind die Ränder oder die Längsränder über ihre gesamte Länge durchgehend mit dem Kontaktelement, insbesondere der Kontaktplatte, verschweißt.

In weiteren möglichen Ausführungsformen sind die Kontaktelemente mit dem jeweiligen Rand oder Längsrand über eine Mehrzahl oder Vielzahl von Schweißpunkten verbunden.

Wenn der Elektroden-Separator-Verbund in Form eines spiralförmigen Wickels vorliegt, weisen die aus den endständigen Stirnseiten des Wickels austretenden Längsränder des Anodenstromkollektors und des Kathodenstromkollektors in der Regel ebenfalls eine spiralförmige Geometrie auf. Analoges gilt dann auch für die linienartige Kontaktzone, entlang der die Kontaktelemente, insbesondere die Kontaktplatten, mit dem jeweiligen Längsrand verschweißt sind.

Wenn der Elektroden-Separator-Verbund Bestandteil des Stapels aus den zwei oder mehr identischen Elektroden-Separator-Verbünden ist, so weisen die aus den endständigen Seiten des Stapels austretenden Ränder des Anodenstromkollektors und des Kathodenstromkollektors häufig eine lineare Geometrie auf. Analoges gilt dann auch für die linienartige Kontaktzone, entlang der die Kontaktelemente, insbesondere die Kontaktplatten, mit dem jeweiligen Rand verschweißt sind.

### Bevorzugte Ausgestaltungen des Gehäuses

Bei der Herstellung von Verbünden aus Elektroden und Separatoren wird üblicherweise darauf geachtet, dass es nicht zu einem einseitigen Überstehen entgegengesetzt gepolter Stromkollektoren kommt, da dies die Kurzschlussgefahr erhöhen kann. Bei der beschriebenen versetzten Anordnung von Anode und Kathode ist die Kurzschlussgefahr jedoch minimiert, da die entgegengesetzt gepolten Stromkollektoren aus sich gegenüberliegenden Stirnseiten des Wickels oder Seiten des Stapels austreten.

Den aus der versetzten Anordnung resultierenden Überstand der Stromkollektoren kann man sich erfindungsgemäß zunutze machen, indem man sie mittels eines entsprechenden Stromableiters, bevorzugt über ihre gesamte Länge, kontaktiert. Als Stromableiter dient erfindungsgemäß das erwähnte Kontaktelement. Eine solche elektrische Kontaktierung senkt den Innenwiderstand innerhalb der erfindungsgemäßen Zelle sehr deutlich. Die beschriebene Anordnung kann das Auftreten großer Ströme somit sehr gut abfangen. Mit minimiertem Innenwiderstand reduzieren sich thermische Verluste bei hohen Strömen. Zudem wird die Abfuhrthermischer Energie aus dem gewickelten Elektroden-Separator-Verbund begünstigt. Bei starken Belastungen tritt eine Erwärmung nicht lokal sondern gleichmäßig verteilt auf.

Neben den genannten Elementen umfasst die erfindungsgemäße Lithium-Ionen-Zelle zweckmäßigerweise auch ein Gehäuse aus zwei oder mehr Gehäuseteilen, das den Elektroden-Separator-Verbund in Form eines Wickels bevorzugt gas- und/oder flüssigkeitsdicht umschließt.

Bei Verwendung der Kontaktelemente ist es in der Regel erforderlich, die Kontaktelemente elektrisch mit dem Gehäuse zu verbinden oder aber mit elektrischen Leitern, die aus dem Gehäuse herausgeführt sind. Beispielsweise können die Kontaktelemente hierzu mit den erwähnten Gehäuseteilen unmittelbar oder über elektrische Leiter verbunden werden.

Wenn der Elektroden-Separator-Verbund Bestandteil des Stapels aus den zwei oder mehr identischen Elektroden-Separator-Verbünden ist, so sind die identischen Elektroden-Separator-Verbünde innerhalb des Stapels derart angeordnet, dass die Ränder ihrer Anodenstromkollektoren, gegebe-nenfalls auch die Längsränder ihrer Anodenstromkollektoren, und die Ränder ihrer Kathodenstromkollektoren, gegebenenfalls auch die Längsränder ihrer Kathodenstromkollektoren, jeweils aus der gleichen Seite des Stapels austreten. So können gleichzeitig alle Anodenstromkollektoren und alle Kathodenstromkollektoren mit dem jeweils gleichen Kontaktelement elektrisch kontaktiert werden.

In besonders bevorzugten Ausführungsformen zeichnet sich die erfindungsgemäße Zelle dadurch aus, dass ein Teil des Gehäuses als das Kontaktelement, insbesondere die Kontaktplatte, dient und/oder dass das Kontaktelement, insbesondere die Kontaktplatte, einen Teil des Gehäuses bildet, das den Elektroden-Separator-Verbund umschließt.

Diese Ausführungsformen sind besonders vorteilhaft. Zum einen ist sie aus Entwärmungsaspekten optimal. Innerhalb des Wickels oder des Stapels entstehende Wärme kann über die Ränder, insbesondere die Längsränder, direkt ans Gehäuse abgegeben werden. Zum anderen lässt sich auf diese Weise das Innenvolumen eines Gehäuses mit vorgegebenen Außenmaßen nahezu optimal ausnutzen. Jedes separate Kontaktelement und jeder separate elektrische Leiter zum Verbinden der Kontaktelemente mit dem Gehäuse benötigt Raum innerhalb des Gehäuses und trägt zum Gewicht der Zelle bei. Bei Verzicht auf solche separaten Komponenten steht dieser Raum für Aktivmaterial zur Verfügung. So kann die Energiedichte erfindungsgemäßer Zellen weiter erhöht werden.

In einer ersten, besonders bevorzugten Kontaktierungsvariante zeichnet sich die erfindungsgemäße Zelle durch mindestens eines der unmittelbar folgenden Merkmale a. und b., besonders bevorzugt durch eine Kombination der beiden Merkmale, aus:
a. Das Gehäuse umfasst ein becherförmiges erstes Gehäuseteil mit einem Boden und einer umlaufenden Seitenwand und einer Öffnung und ein zweites Gehäuseteil, das die Öffnung verschließt.
b. Das Kontaktelement, insbesondere die Kontaktplatte, ist der Boden des ersten Gehäuseteils.

Bevorzugt ist das Gehäuse zylindrisch oder prismatisch ausgebildet. Das becherförmige erste Gehäuseteil weist entsprechend bevorzugt einen kreisförmigen oder rechteckigen Querschnitt auf und das zweite Gehäuseteil sowie der Boden des ersten Gehäuseteils sind entsprechend bevorzugt kreisförmig oder rechteckig ausgebildet.

Wenn der Elektroden-Separator-Verbund in Form des Wickels mit den zwei endständigen Stirnseiten vorliegt, ist das Gehäuse bevorzugt zylindrisch. Ist der Elektroden-Separator-Verbund hingegen Bestandteil des Stapels aus den zwei oder mehr identischen Elektroden-Separator-Verbünden, so ist das Gehäuse bevorzugt prismatisch ausgebildet.

Wenn das Gehäuse zylindrisch ausgebildet ist, dann umfasst es in aller Regel einen zylindrischen Gehäusemantel sowie ein kreisförmiges Oberteil und ein kreisförmiges Unterteil, wobei in dieser Variante das erste Gehäuseteil den Gehäusemantel und das kreisförmige Unterteil umfasst während das zweite Gehäuseteil dem kreisförmigen Oberteil entspricht. Das kreisförmige Oberteil und/oder das kreisförmige Unterteil können als Kontaktelemente, insbesondere als Kontaktplatten, dienen.

Wenn das Gehäuse prismatisch ausgebildet ist, dann umfasst das Gehäuse in aller Regel mehrere rechteckige Seitenwände sowie ein polygonales, insbesondere rechteckiges Oberteil und ein polygonales, insbesondere rechteckiges Unterteil, wobei in dieser Variante das erste Gehäuseteil die Seitenwände und das polygonale Unterteil umfasst während das zweite Gehäuseteil dem kreisförmigen polygonalen Oberteil entspricht. Das Oberteil und/oder das Unterteil können als Kontaktelemente, insbesondere als Kontaktplatten, dienen.

Sowohl das erste als auch das zweite Gehäuseteil besteht bevorzugt aus einem elektrisch leitenden Werkstoff, insbesondere aus einem metallischen Werkstoff. Die Gehäuseteile können z.B. unabhängig voneinander aus einem vernickelten Stahlblech oder aus legiertem oder unlegiertem Aluminium bestehen.

In einer bevorzugten Weiterbildung der ersten Kontaktierungsvariante zeichnet sich die erfindungsgemäße Zelle durch mindestens eines der unmittelbar folgenden Merkmale a. bis e., insbesondere durch eine Kombination der unmittelbar vorstehenden Merkmale a. bis e., aus:
a. Die Zelle weist ein metallisches Kontaktelement, insbesondere eine metallische Kontaktplatte, auf, mit der der erste Rand oder der erste Längsrand des Anodenstromkollektors, bevorzugt der Länge nach, in unmittelbarem Kontakt steht und mit der dieser Rand oder Längsrand durch Verschweißung verbunden ist.
b. Die Zelle weist ein metallisches Kontaktelement, insbesondere eine metallische Kontaktplatte auf, mit der der erste Rand oder der erste Längsrand des Kathodenstromkollektors, bevorzugt der Länge nach, in unmittelbarem Kontakt steht und mit der dieser Rand oder Längsrand durch Verschweißung verbunden ist.
c. Eines der Kontaktelemente, insbesondere eine der Kontaktplatten, ist der Boden des ersten Gehäuseteils.
d. Das andere der Kontaktelemente, insbesondere die andere der Kontaktplatten, ist über einen elektrischen Leiter mit dem zweiten Gehäuseteil verbunden.
e. Die Zelle umfasst eine Dichtung, welche das erste und das zweite Gehäuseteil elektrisch voneinander isoliert.

Bei dieser Ausführungsform können zum Umschließen des Elektroden-Separator-Verbunds herkömmliche Gehäuseteile verwendet werden. Es wird kein Platz für elektrische Leiter verschwendet, die zwischen dem Boden und dem Elektroden-Separator-Verbund angeordnet werden. Ein separates Kontaktelement, insbesondere eine separate Kontaktplatte, wird bodenseitig nicht benötigt. Zum Schließen des Gehäuses kann die elektrisch isolierende Dichtung auf einen Rand des zweiten Gehäuseteils aufgezogen werden. Die Baugruppe aus dem zweiten Gehäuseteil und der Dichtung kann in die Öffnung des ersten Gehäuseteils eingesetzt und dort mechanisch fixiert werden, beispielsweise mittels eines Bördelvorgangs.

In einer besonders bevorzugten Ausführungsform der ersten Kontaktierungsvariante kann auch das zweite Gehäuseteil als Kontaktelement, insbesondere als Kontaktplatte, dienen. In dieser Ausführungsform zeichnet sich die erfindungsgemäße Zelle durch mindestens eines der unmittelbar folgenden Merkmale a. bis e., insbesondere durch eine Kombination der unmittelbar vorstehenden Merkmale a. bis e., aus
a. Die Zelle weist ein metallisches Kontaktelement, insbesondere eine metallische Kontaktplatte, auf, mit der der erste Rand oder der erste Längsrand des Anodenstromkollektors, bevorzugt der Länge nach, in unmittelbarem Kontakt steht und mit der dieser Rand oder Längsrand durch Verschweißung verbunden ist.
b. Die Zelle weist eine metallisches Kontaktelement, insbesondere eine metallische Kontaktplatte auf, mit der der erste Rand oder der erste Längsrand des Kathodenstromkollektors, bevorzugt der Länge nach, in unmittelbarem Kontakt steht und mit der dieser Rand oder Längsrand durch Verschweißung verbunden ist.
c. Eines der Kontaktelemente, insbesondere eine der Kontaktplatten, ist der Boden des ersten Gehäuseteils.
d. Das andere der Kontaktelemente, insbesondere die andere der der Kontaktplatten, ist das zweite Gehäuseteil.
e. Die Zelle umfasst eine elektrische Dichtung, welche das erste und das zweite Gehäuseteil elektrisch voneinander isoliert.

In dieser Ausführungsform werden auf keiner Seite des Elektroden-Separator-Verbunds elektrische Leiter zum Verbinden von Kontaktelementen mit Gehäuseteilen benötigt. Auf einer Seite kommt einem Kontaktelement zusätzlich die Funktion eines Gehäuseteils zu, auf der anderen Seite dient ein Teil eines Gehäuses als Kontaktelement. Der Raum innerhalb des Gehäuses kann optimal genutzt werden.

In einer weiteren bevorzugten Weiterbildung der ersten Kontaktierungsvariante zeichnet sich die erfindungsgemäße Zelle durch mindestens eines der unmittelbar folgenden Merkmale a. bis e. aus:
a. Die Zelle weist ein metallisches Kontaktelement, insbesondere eine metallische Kontaktplatte, auf, mit der der erste Rand oder der erste Längsrand des Anodenstromkollektors, bevorzugt der Länge nach, in unmittelbarem Kontakt steht und mit der dieser Rand oder Längsrand durch Verschweißung verbunden ist.
b. Die Zelle weist ein metallisches Kontaktelement, insbesondere eine metallische Kontaktplatte, auf, mit der der erste Rand oder der erste Längsrand des Kathodenstromkollektors, bevorzugt der Länge nach, in unmittelbarem Kontakt steht und mit der dieser Rand oder Längsrand durch Verschweißung verbunden ist.
c. Eines der Kontaktelemente, insbesondere eine der Kontaktplatten, ist der Boden des ersten Gehäuseteils.
d. Das zweite Gehäuseteil ist in die Öffnung des ersten Gehäuseteils eingeschweißt und umfasst eine Poldurchführung, beispielsweise ein von einem elektrischen Isolator umgebener Polbolzen, durch welche ein elektrischer Leiter aus dem Gehäuse herausgeführt ist.
e. Das andere der Kontaktelemente, insbesondere die andere der Kontaktplatten, ist mit diesem elektrischen Leiter elektrisch verbunden.

Es ist besonders bevorzugt, dass die unmittelbar vorstehenden Merkmale a. bis e. in Kombination miteinander verwirklicht sind.

In dieser Ausführungsform sind die Gehäuseteile miteinander verschweißt und damit elektrisch miteinander verbunden. Aus diesem Grund wird besagte Poldurchführung benötigt.

In einer zweiten bevorzugten Kontaktierungsvariante zeichnet sich die erfindungsgemäße Zelle durch mindestens eines der unmittelbar folgenden Merkmale a. und b., besonders bevorzugt durch eine Kombination der beiden Merkmale, aus:
a. Das Gehäuse umfasst ein rohrförmiges erstes Gehäuseteil mitzwei endständigen Öffnungen, ein zweites Gehäuseteil, das eine der Öffnungen verschließt und ein drittes Gehäuseteil, das die andere der Öffnungen verschließt.
b. Das Kontaktelement, insbesondere die Kontaktplatte, ist das zweite Gehäuseteil oder das dritte Gehäuseteil.

Auch in dieser Kontaktierungsvariante ist das Gehäuse der Zelle bevorzugt zylindrisch oder prismatisch ausgebildet. Das rohrförmige erste Gehäuseteil weist entsprechend bevorzugt einen kreisförmigen oder rechteckigen Querschnitt auf und das zweite und dritte Gehäuseteil sind entsprechend bevorzugt kreisförmig oder rechteckig ausgebildet.

Wenn das Gehäuse zylindrisch ausgebildet ist, dann ist das erste Gehäuseteil in aller Regel hohlzylindrisch ausgebildet während das zweite und dritte Gehäuseteil kreisförmig ausgebildet sind und als Kontaktelemente, insbesondere als Kontaktplatten, sowie gleichzeitig als Boden und Deckel, welche das erste Gehäuseteil endständig verschließen können, dienen können.

Wenn das Gehäuse prismatisch ausgebildet ist, dann umfasst das erste Gehäuseteil in aller Regel mehrere rechteckige, über gemeinsame Kanten miteinander verbundene Seitenwände, während das zweite und das dritte Gehäuseteil jeweils polygonal, insbesondere rechteckig, ausgebildet sind. Sowohl das zweite und das dritte Gehäuseteil können als Kontaktelemente, insbesondere als Kontaktplatten, dienen.

Sowohl das erste als auch das zweite Gehäuseteil besteht bevorzugt aus einem elektrisch leitenden Werkstoff, insbesondere aus einem metallischen Werkstoff. Die Gehäuseteile können z.B. aus einem vernickelten Stahlblech, aus Edelstahl (beispielsweise vom Typ 1.4303 oder 1.4304), aus Kupfer, aus vernickeltem Kupferoderaus legiertem oder unlegiertem Aluminium bestehen. Es kann auch bevorzugt sein, dass mit der Kathode elektrisch verbundene Gehäuseteile aus Aluminium oder aus einer Aluminiumlegierung und mit der Anode elektrisch verbundene Gehäuseteile aus Kupfer oder einer Kupferlegierung oder aus vernickeltem Kupfer bestehen.

Ein großer Vorteil dieser Variante ist, dass zur Bildung des Gehäuses keine durch vorgeschaltete Umform- und/oder Gießvorgänge herzustellende becherförmige Gehäuseteile benötigt werden. Als Ausgangspunkt dient stattdessen besagtes rohrförmiges erstes Gehäuseteil.

In einer bevorzugten Weiterbildung der zweiten Variante zeichnet sich die erfindungsgemäße Zelle durch mindestens eines der unmittelbar folgenden Merkmale a. bis e., insbesondere durch eine Kombination der unmittelbar vorstehenden Merkmale a. bis e., aus:
a. Die Zelle weist ein metallisches Kontaktelement, insbesondere eine metallische Kontaktplatte, auf, mit der der erste Rand oder der erste Längsrand des Anodenstromkollektors, bevorzugt der Länge nach, in unmittelbarem Kontakt steht und mit der dieser Rand oder Längsrand durch Verschweißung verbunden ist.
b. Die Zelle weist ein metallisches Kontaktelement, insbesondere eine metallische Kontaktplatte, auf, mit der der erste Rand oder der erste Längsrand des Kathodenstromkollektors, bevorzugt der Länge nach, in unmittelbarem Kontakt steht und mit der dieser Rand oder Längsrand durch Verschweißung verbunden ist.
c. Eines der Kontaktelemente, insbesondere eine der Kontaktplatten, ist in eine der endständigen Öffnungen des ersten Gehäuseteils eingeschweißt und ist das zweite Gehäuseteil.
d. Das dritte Gehäuseteil ist in die andere der endständigen Öffnungen des ersten Gehäuseteils eingeschweißt und umfasst eine Poldurchführung, durch welche ein elektrischer Leiter aus dem Gehäuse herausgeführt ist, beispielsweise einen von einem elektrischen Isolator umgebenen Polbolzen.
e. Das andere der Kontaktelemente, insbesondere die andere der Kontaktplatten, ist mit diesem elektrischen Leiter elektrisch verbunden.

Es ist besonders bevorzugt, dass die unmittelbar vorstehenden Merkmale a. bis e. in Kombination miteinander verwirklicht sind.

In einer weiteren bevorzugten Weiterbildung der zweiten Variante zeichnet sich die erfindungsgemäße Zelle durch mindestens eines der unmittelbar folgenden Merkmale a. bis d. aus:
a. Die Zelle weist ein metallisches Kontaktelement, insbesondere eine metallische Kontaktplatte, auf, mit der der erste Rand oder der erste Längsrand des Anodenstromkollektors, bevorzugt der Länge nach, in unmittelbarem Kontakt steht und mit der dieser Rand oder Längsrand durch Verschweißungverbunden ist.
b. Die Zelle weist ein metallisches Kontaktelement, insbesondere eine metallische Kontaktplatte, auf, mit der der erste Rand oder der erste Längsrand des Kathodenstromkollektors, bevorzugt der Länge nach, in unmittelbarem Kontakt steht und mit der dieser Rand oder Längsrand durch Verschweißung verbunden ist.
c. Eines der Kontaktelemente, insbesondere eine der Kontaktplatten, ist in eine der endständigen Öffnungen des ersten Gehäuseteils eingeschweißt und ist das zweite Gehäuseteil.
d. Das andere der Kontaktelemente, insbesondere die andere der Kontaktplatten, verschließt als drittes Gehäuseteil die andere der endständigen Öffnungen des ersten Gehäuseteils und ist mittels einer Dichtung von dem ersten Gehäuseteil isoliert.

Es ist besonders bevorzugt, dass die unmittelbar vorstehenden Merkmale a. bis d. in Kombination miteinander verwirklicht sind.

Beide Ausführungsformen zeichnen sich dadurch aus, dass auf einer Gehäuseseite ein Kontaktelement, insbesondere eine Kontaktplatte, als Gehäuseteil dient und mit dem ersten Gehäuseteil durch Verschweißung verbunden ist. Auf der anderen Seite kann ebenfalls ein Kontaktelement, insbesondere eine Kontaktplatte, als Gehäuseteil dienen. Diese muss dann aber elektrisch von dem ersten Gehäuseteil isoliert sein. Alternativ kann auch hier wieder mit einer Poldurchführung gearbeitet werden.

Die Poldurchführungen erfindungsgemäßer Zellen umfassen stets einen elektrischen Isolator, der einen elektrischen Kontakt des Gehäuses mit dem aus dem Gehäuse geführten elektrischen Leiter unterbindet. Bei dem elektrischen Isolator kann es sich beispielsweise um ein Glas oder einen keramischen Werkstoff oder um einen Kunststoff handeln.

Der Elektroden-Separator-Verbund liegt bevorzugt in Form eines zylindrischen Wickels vor. Die Bereitstellung der Elektroden in Form eines solchen Wickels erlaubt eine besonders vorteilhafte Raumnutzung in zylindrischen Gehäusen. Das Gehäuse ist daher in bevorzugten Ausführungsformen ebenfalls zylindrisch.

In anderen bevorzugten Ausführungsformen liegt der Elektroden-Separator-Verbund bevorzugt in Form eines prismatischen Wickels vor. Die Bereitstellung der Elektroden in Form eines solchen Wickels erlaubt eine besonders vorteilhafte Raumnutzung in prismatischen Gehäusen. Das Gehäuse ist daher in bevorzugten Ausführungsformen ebenfalls prismatisch.

Daneben können prismatische Gehäuse besonders gut von prismatischen Stapeln aus den oben eingeführten identischen Elektroden-Separator-Verbünden ausgefüllt werden. Die Elektroden-Separator-Verbünde können zu diesem Zweck besonders bevorzugt eine im Wesentlichen rechteckige Grundform aufweisen.

Bei den Gehäuseteilen handelt es sich bevorzugt um Blechteile mit einer Dicke im Bereich von 50 µm bis 600 µm, bevorzugt im Bereich von 150 - 350 µm. Die Blechteile bestehen wiederum bevorzugt aus legiertem oder unlegiertem Aluminium, Titan, Nickel oder Kupfer, gegebenenfalls auch aus Edelstahl (beispielsweise vom Typ 1.4303 oder 1.4304) oder aus vernickeltem Stahl.

Zu betonen ist, dass alle beschriebenen Ausführungsformen, bei denen ein Teil des Gehäuses als das Kontaktelement, insbesondere als die Kontaktplatte, dient und/oder das Kontaktelement, insbesondere die Kontaktplatte, einen Teil des Gehäuses bildet, das den Elektroden-Separator-Verbund umschließt, insbesondere die erste und die zweite Kontaktierungsvariante, auch völlig unabhängig von Merkmal j. aus Anspruch 1 realisierbar sind. Die Erfindung umfasst somit auch Zellen mit den Merkmalen a. bis i. des Anspruchs 1, bei denen ein Teil des Gehäuses als das Kontaktelement, insbesondere als die Kontaktplatte, dient und/oder das Kontaktelement, insbesondere die Kontaktplatte, einen Teil des Gehäuses bildet, der Separator aber nicht zwingend das mindestens eine anorganische Material, das seine Widerstandsfähigkeit gegenüber thermischen Belastungen verbessert, umfassen muss.

### Bevorzugte Ausgestaltungen der Stromkollektoren

In besonders bevorzugten Ausgestaltungen ist die erfindungsgemäße Zelle durch mindestens eines der unmittelbar folgenden Merkmale a. bis c. gekennzeichnet:
a. der Hauptbereich des mit dem Kontaktelement, insbesondere der Kontaktplatte, durch Verschweißung verbundenen Stromkollektors, bevorzugt der bandförmige Hauptbereich des mit der Kontaktplatte durch Verschweißung verbundenen Stromkollektors, weist eine Vielzahl von Durchbrechungen auf.
b. Bei den Durchbrechungen in dem Hauptbereich handelt es sich um runde oder eckige Löcher, insbesondere Stanz- oder Bohrlöcher.
c. Der mit dem Kontaktelement, insbesondere der Kontaktplatte, durch Verschweißung verbundene Stromkollektor ist in dem Hauptbereich perforiert, insbesondere durch Rundloch- oder Schlitzlochperforation.

Die Vielzahl von Durchbrechungen resultiert in einem verringerten Volumen und auch verringertem Gewicht des Stromkollektors. Dies macht es möglich, mehr Aktivmaterial in die Zelle einzubringen und auf diese Weise die Energiedichte der Zelle drastisch zu steigern. Energiedichtenerhöhungen bis in den zweistelligen Prozentbereich können so erreicht werden.

In einigen bevorzugten Ausführungsformen sind die Durchbrechungen mittels Laser in den bandförmigen Hauptbereich eingebracht.

Grundsätzlich ist die Geometrie der Durchbrechungen nicht erfindungswesentlich. Wichtig ist, dass in Folge der Einbringung der Durchbrechungen die Masse des Stromkollektors verringert und mehr Platz für Aktivmaterial da ist, da die Durchbrechungen mit dem Aktivmaterial befüllt werden können.

Sehr vorteilhaft kann hingegen sein, bei der Einbringung der Durchbrechungen darauf zu achten, dass der maximale Durchmesser der Durchbrechungen nicht zu groß ist. Bevorzugt sollten die Durchbrechungen nicht mehr als das doppelte der Dicke der Schicht des Elektrodenmaterials auf dem jeweiligen Stromkollektor betragen.

In besonders bevorzugten Ausgestaltungen ist die erfindungsgemäße Zelle durch das unmittelbar folgende Merkmal a. gekennzeichnet:
a. Die Durchbrechungen in dem Stromkollektor, insbesondere in dem Hauptbereich, weisen Durchmesser im Bereich von 1 µm bis 3000 µm auf.

Innerhalb dieses bevorzugten Bereiches sind Durchmesser im Bereich von 10 µm bis 2000 µm, bevorzugt von 10 µm bis 1000 µm, insbesondere von 50 µm bis 250 µm, weiter bevorzugt.

Besonders bevorzugt zeichnet sich die erfindungsgemäße Zelle weiterhin durch mindestens eines der unmittelbar folgenden Merkmale a. und b. aus:
a. Der mit dem Kontaktelement, insbesondere der Kontaktplatte, durch Verschweißung verbundene Stromkollektor weist zumindest in einem Teilabschnitt des Hauptbereichs ein geringeres Flächengewicht auf als derfreie Randstreifen desselben Stromkollektors.
b. Der mit dem Kontaktelement, insbesondere der Kontaktplatte, durch Verschweißung verbundene Stromkollektor weist in dem freien Randstreifen keine oder weniger Durchbrechungen pro Flächeneinheit als in dem Hauptbereich auf.

Es ist besonders bevorzugt, dass die unmittelbar vorstehenden Merkmale a. und b. in Kombination miteinander verwirklicht sind.

Der freien Randstreifen von Anoden- und Kathodenstromkollektor begrenzen den Hauptbereich zu den ersten Rändern oder den ersten Längsrändern hin. Bevorzugt umfassen sowohl der Anoden- als auch der Kathodenstromkollektor freie Randstreifen jeweils entlang ihren beiden Rändern, insbesondere entlang ihren beiden Längsrändern.

Die Durchbrechungen charakterisieren den Hauptbereich. Mit anderen Worten, die Grenze zwischen dem Hauptbereich und dem oder den freien Randstreifen entspricht einem Übergang zwischen Bereichen mit und ohne Durchbrechungen.

Die Durchbrechungen sind bevorzugt im Wesentlichen gleichmäßig über den Hauptbereich verteilt.

In weiteren besonders bevorzugten Ausführungsformen zeichnet sich die erfindungsgemäße Zelle durch mindestens eines der unmittelbar folgenden Merkmale a. bis c. aus:
a. Das Flächengewicht des Stromkollektors ist in dem Hauptbereich gegenüber dem Flächengewicht des Stromkollektors in dem freien Randstreifen um 5 % bis 80 % reduziert.
b. Der Stromkollektor weist in dem Hauptbereich eine Lochfläche im Bereich von 5 % bis 80 % auf.
c. Der Stromkollektor weist in dem Hauptbereich eine Zugfestigkeit von 20 N/mm² bis 250 N/mm² auf.

Die Bestimmung der Lochfläche, die häufigauch als freier Querschnitt bezeichnet wird, kann gemäß ISO 7806-1983 erfolgen. Die Zugfestigkeit des Stromkollektors in dem Hauptbereich ist gegenüber Stromkollektoren ohne die Durchbrechungen verringert. Ihre Bestimmung kann gemäß DIN EN ISO 527 Teil 3 erfolgen.

Es ist bevorzugt, dass der Anodenstromkollektor und der Kathodenstromkollektor bezüglich der Durchbrechungen gleich oder ähnlich ausgebildetsind. Diejeweils erzielbaren Energiedichteverbesserungen addieren sich. Die erfindungsgemäße Zelle zeichnet sich daher in bevorzugten Ausführungsformen weiterhin durch mindestens eines der unmittelbar folgenden Merkmale a. bis c. aus:
a. Der Hauptbereich des Anodenstromkollektors und der Hauptbereich des Kathodenstromkollektors, bevorzugt der bandförmige Hauptbereich des Anodenstromkollektors und der bandförmige Hauptbereich des Kathodenstromkollektors, sind beide durch eine Vielzahl der Durchbrechungen gekennzeichnet.
b. Die Zelle umfasst das Kontaktelement, insbesondere die Kontaktplatte, die auf dem einem der ersten Ränder oder Längsränder aufliegt, als erstes Kontaktelement oder als erste Kontaktplatte, sowie weiterhin ein zweites Kontaktelement, insbesondere eine zweite metallische Kontaktplatte, die auf dem anderen der ersten Ränder oder Längsränder aufliegt.
c. Das zweite Kontaktelement, insbesondere die zweite Kontaktplatte, ist mit diesem anderen Rand oder Längsrand durch Verschweißung verbunden.

Es ist besonders bevorzugt, dass die unmittelbar vorstehenden Merkmale a. bis c. in Kombination miteinander verwirklicht sind. Die Merkmale b. und c. können in Kombination aber auch ohne Merkmal a. realisiert sein.

Die vorstehend beschriebenen bevorzugten Ausgestaltungen des mit den Durchbrechungen versehenen Stromkollektors sind unabhängig voneinander auf den Anodenstromkollektor und den Kathodenstromkollektor anwendbar.

Die Verwendung perforierter oder auf sonstige Weise mit einer Vielzahl von Durchbrechungen versehener Stromkollektoren ist bei Lithium-ionen-Zellen bislang nicht ernsthaft in Erwägung gezogen worden, da sich solche Stromkollektoren nur sehr schlecht elektrisch kontaktieren lassen. Wie eingangs erwähnt, erfolgt die elektrische Anbindung der Stromkollektoren vielfach über separate elektrische Ableiterfahnen. Eine zuverlässige Verschweißung dieser Ableiterfahnen an perforierte Stromkollektoren in industriellen Massenproduktionsprozessen ist ohne eine akzeptable Fehlerrate jedoch nur schwer realisierbar.

Erfindungsgemäß wird dieses Problem durch die beschriebene Verschweißung der Stromkollektorränder mit der oder den Kontaktelementen, insbesondere den Kontaktplatten, gelöst. Das erfindungsgemäße Konzept ermöglicht den vollständigen Verzicht auf separate Ableiterfahnen und ermöglicht so die Verwendung materialarmer, mit Durchbrechungen versehener Stromkollektoren. Insbesondere in Ausführungsformen, bei denen die freien Randstreifen der Stromkollektoren nicht mit Durchbrechungen versehen sind, kann eine Verschweißung zuverlässig mit ausgesprochen geringen Ausschussraten erfolgen.

Dies gilt insbesondere dann, wenn die Ränder der Stromkollektoren, insbesondere die Längsränder der Stromkollektoren, mit der oben beschriebenen Stützschicht versehen sind und der Separator, wie beschrieben, gegenüber thermischen Belastungen verbessert ist.

Zu betonen ist, dass alle beschriebenen Ausführungsformen, bei denen der bevorzugt bandförmige Hauptbereich des mit dem Kontaktelement, insbesondere der Kontaktplatte, durch Verschweißung verbundenen Stromkollektors eine Vielzahl von Durchbrechungen aufweist, auch völlig unabhängig von Merkmal j. aus Anspruch 1 realisierbar sind. Die Erfindung umfasst somit auch Zellen mit den Merkmalen a. bis i. des Anspruchs 1, bei denen der bevorzugt bandförmige Hauptbereich des mit dem Kontaktelement, insbesondere der Kontaktplatte, durch Verschweißung verbundenen Stromkollektors eine Vielzahl von Durchbrechungen aufweist, der Separator aber nicht zwingend das mindestens eine anorganische Material, das seine Widerstandsfähigkeit gegenüber thermischen Belastungen verbessert, umfassen muss.

### Sonstige bevorzugte Ausgestaltungen der Zelle

Bei der erfindungsgemäßen Lithium-Ionen-Zelle kann es sich um eine Knopfzelle handeln. Knopfzellen sind zylindrisch ausgebildet und weisen eine Höhe auf, die geringer als ihr Durchmesser ist. Bevorzugt liegt die Höhe im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer als Knopfzelle ausgebildeten erfindungsgemäßen Lithium-Ionen-Zelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Lithium-Ionen-Zelle eine zylindrische Rundzelle. Zylindrische Rundzellen weisen eine Höhe auf, die größer als ihr Durchmesser ist. Sie eignen sich insbesondere für Anwendungen im Automobilbereich, für E-Bikes oder auch für andere Anwendungen mit hohem Energiebedarf.

Bevorzugt liegt die Höhe als Rundzelle ausgebildeter Lithium-Ionen-Zellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität der als zylindrische Rundzelle ausgebildeten erfindungsgemäßen Lithium-Ionen-Zelle beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator sind in Ausführungsformen, bei denen die erfindungsgemäße Zelle eine zylindrische Rundzelle ist, bevorzugt bandförmig ausgebildet und weisen bevorzugt die folgenden Dimensionen auf:
- Eine Länge im Bereich von 0,5 m bis 25 m
- Eine Breite im Bereich 30 mm bis 145 mm

Der freie Randstreifen, dersich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18 x 65 weisen die Stromkollektoren bevorzugt
- eine Breite von 56 mm bis 62 mm, bevorzugt von 60 mm, und
- eine Länge von nicht mehr als 1,5 m
   auf.

Im Falle einer zylindrischen Rundzelle mit dem Formfaktor 21 x 70 weisen die Stromkollektoren bevorzugt
- eine Breite von 56 mm bis 68 mm, bevorzugt von 65 mm, und
- eine Länge von nicht mehr als 2,5 m
   auf.

Die Funktion einer Lithium-Ionen-Zelle basiert darauf, dass ausreichend mobile Lithiumionen (mobiles Lithium) zur Verfügung stehen, um durch Wanderung zwischen der Anode und der Kathode bzw. der negativen Elektrode und der positiven Elektrode den abgegriffenen elektrischen Strom auszugleichen. Unter mobilem Lithium im Rahmen dieser Anmeldung ist zu verstehen, dass das Lithium für Ein- und Auslagerungsvorgänge in den Elektroden im Rahmen der Entlade- und Ladevorgänge der Lithium-Ionen-Zelle zur Verfügung steht oder hierfür aktiviert werden kann. Im Zuge der ablaufenden Entlade- und Ladeprozesse einer Lithium-Ionen-Zelle kommt es im Laufe der Zeit zu Verlusten an mobilem Lithium. Diese Verluste treten in Folge von verschiedenen, in der Regel nicht vermeidbaren Nebenreaktionen auf. Bereits im Rahmen des ersten Lade- und Entladezyklus einer Lithium-Ionen-Zelle kommt es zu Verlusten an mobilem Lithium. Bei diesem ersten Lade- und Entladezyklus bildet sich in der Regel eine Deckschicht auf der Oberfläche der elektrochemisch aktiven Komponenten an der negativen Elektrode. Diese Deckschicht wird als *Solid Electrolyte Interphase* (SEI) bezeichnet und besteht in der Regel vor allem aus Elektrolytzersetzungsprodukten sowie einer gewissen Menge an Lithium, das in dieser Schicht fest gebunden ist.

Der mit diesem Vorgang verbundene Verlust an mobilem Lithium ist besonders stark bei Zellen, deren Anode Anteile an Silizium aufweist. Um diese Verluste auszugleichen, zeichnet sich die erfindungsgemäße Zelle in bevorzugten Ausführungsformen durch mindestens eines der unmittelbarfolgenden Merkmale a. und b. aus:
a. Die Zelle umfasst ein nicht von der positiven und/oder der negativen Elektrode umfasstes Depot an Lithium oder einem lithiumhaltigen Material, mit dem Verluste an mobilem Lithium in der Zelle während ihres Betriebs ausgeglichen werden können.
b. Das Depot steht in Kontakt mit dem Elektrolyten der Zelle.
c. Die Zelle verfügt über einen elektrischen Leiter und gegebenenfalls zusätzlich über einen steuerbaren Schalter, über den oder die das Depot elektrisch mit der positiven oder der negativen Elektrode verbunden werden kann.

Es ist besonders bevorzugt, dass die unmittelbar vorstehenden Merkmale a. bis c. in Kombination miteinander verwirklicht sind.

Besonders bevorzugt sind das Depot innerhalb des Gehäuses der erfindungsgemäßen Zelle angeordnet und der elektrische Leiter, beispielsweise über eine geeignete Poldurchführung, aus dem Gehäuse herausgeführt, insbesondere bis zu einem elektrischen Kontakt, der von außerhalb des Gehäuses abgegriffen werden kann.

Das elektrisch kontaktierbare Lithium-Depot ermöglicht es, den Elektroden der Zelle bei Bedarf Lithium zuzuführen oder aber zur Vermeidung von Lithium-Plating überschüssiges Lithium aus den Elektroden abzuführen. Hierzu kann das Lithium-Depot über den elektrischen Leiter gegen die negative oder gegen die positive Elektrode der Lithium-Ionen-Zelle geschaltet werden. Überschüssiges Lithium kann bei Bedarf dem Lithium-Depot zugeführt und dort abgelagert werden. Für diese Anwendungsfälle können Mittel vorgesehen sein, die ein separates Monitoring der Einzelpotentiale von Anode und Kathode in der Zelle und/oder eine externe Überwachung der Zellbalance über elektrochemische Analysen wie DVA (differential voltage analysis) ermöglichen.

Der elektrische Leiter und das damit verbundene Lithium-Depot müssen gegen die positive und die negative Elektrode sowie damit elektrisch gekoppelten Komponenten der Zelle elektrisch isoliert sein.

Bei dem Lithium oder dem lithiumhaltigen Material des Lithium-Depots kann es sich beispielsweise um metallisches Lithium, ein Lithium-Metall-Oxid, ein Lithium-Metall-Phosphat oder andere, dem Fachmann geläufige Materialien handeln.

### Darstellung bevorzugter Ausführungsformen

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

In den Zeichnungen zeigen schematisch
- Fig. 1 eine Draufsicht eines Stromkollektors in einer erfindungsgemäßen Ausgestaltung,
- Fig. 2 eine geschnittene Ansicht des in Fig. 1 dargestellten Stromkollektors,
- Fig. 3 eine Draufsicht einer Anode, die zu einem Elektroden-Separator-Verbund in Form eines Wickels verarbeitet werden kann,
- Fig. 4 eine geschnittene Ansicht der in Fig. 3 dargestellten Anode,
- Fig. 5 eine Draufsicht auf einen unter Verwendung der in Fig. 3 dargestellten Anode gefertigten Elektroden-Separator-Verbund,
- Fig. 6 eine geschnittene Ansicht des in Fig. 5 dargestellten Elektroden-Separator-Verbunds,
- Fig. 7 eine geschnittene Ansicht einer Ausführungsform einer erfindungsgemäßen Zelle in Form einer zylindrischen Rundzelle,
- Fig. 8 eine geschnittene Ansicht einer weiteren Ausführungsform einer erfindungsgemäßen Zelle in Form einer zylindrischen Rundzelle,
- Fig. 9 eine geschnittene Ansicht einer weiteren Ausführungsform einer erfindungsgemäßen Zelle in Form einer zylindrischen Rundzelle,
- Fig. 10 eine geschnittene Ansicht einer weiteren Ausführungsform einererfindungsgemäßen Zelle in Form einer zylindrischen Rundzelle, und
- Fig. 11 eine geschnittene Ansicht einer weiteren Ausführungsform einer erfindungsgemäßen Zelle in Form einer zylindrischen Rundzelle.
- Fig. 12 eine Illustration eines erfindungsgemäßen Verfahrens zur Herstellung der in Fig. 11 dargestellten Zelle.

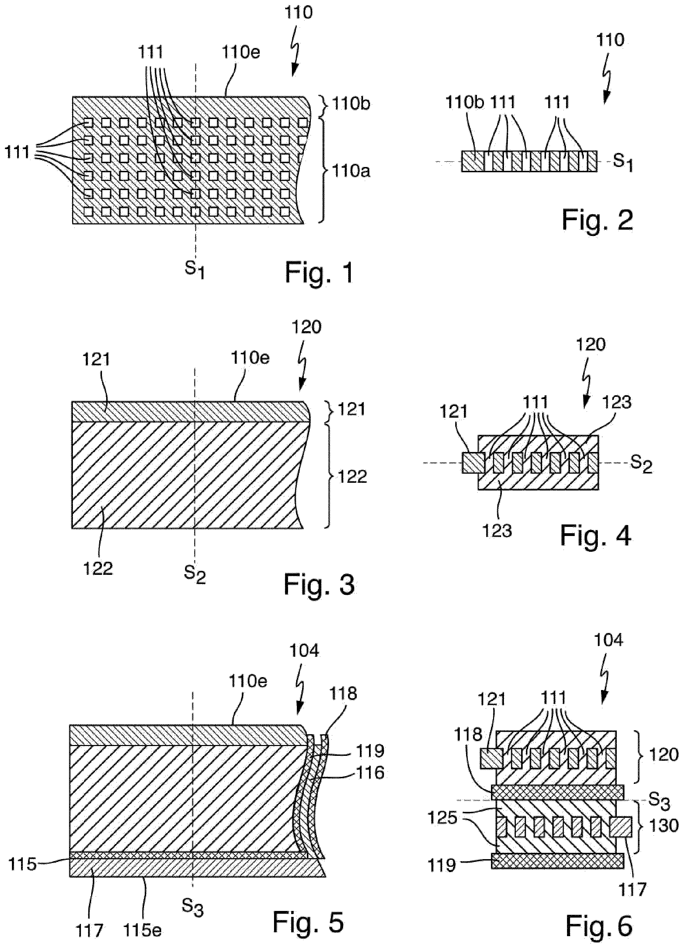

**Fig. 1** und **Fig. 2** veranschaulichen das Design eines Stromkollektors 110, der in einer erfindungsgemäßen Zelle verwendet werden kann. Bei Fig. 2 handelt es sich um einen Schnitt entlang S₁. Der Stromkollektor 110 umfasst eine Vielzahl Durchbrechungen 111, bei denen es sich um rechteckige Löcher handelt. Der Bereich 110a ist durch die Durchbrechungen 111 gekennzeichnet, wohingegen sich im Bereich 110b entlang des Längsrands 110e keine Durchbrechungen finden. Der Stromkollektor 110 weist daher im Bereich 110a ein deutlich geringeres Flächengewicht auf als im Bereich 110b.

**Fig. 3** und **Fig. 4** veranschaulichen eine Anode 120, die unter beidseitigem Auftrag eines negativen Elektrodenmaterials 123 auf den in Fig. 2 und Fig. 3 dargestellten Stromkollektor 110 gefertigt wurde. Bei Fig. 5 handelt es sich um einen Schnitt entlang S₂. DerStromkollektor110 weist nun einen bandförmigen Hauptbereich 122 auf, der mit einer Schicht aus dem negativen Elektrodenmaterial 123 beladen ist, sowie einen freien Randstreifen 121, der sich entlang des Längsrands 110e erstreckt und der nicht mit dem Elektrodenmaterial 123 beladen ist. Das Elektrodenmaterial 123 befüllt darüber hinaus auch die Durchbrechungen 111.

**Fig. 5** und **Fig. 6** veranschaulichen einen Elektroden-Separator-Verbund 104, der unterVerwendung der in Fig. 4 und Fig. 5 dargestellten Anode 120 gefertigt wurde. Daneben umfasst er die Kathode 115 sowie die Separatoren 118 und 119. Bei Fig. 6 handelt es sich um einen Schnitt entlang S3. Die Kathode 115 baut auf dem gleichen Stromkollektordesign auf wie die Anode 120. Bevorzugt unterscheiden sich die Stromkollektoren 110 und 115 von Anode 120 und Kathode 130 nur durch die jeweilige Materialauswahl. So umfasst der Stromkollektor 115 der Kathode 130 einen bandförmigen Hauptbereich 116, der mit einer Schicht aus positivem Elektrodenmaterial 125 beladen ist, sowie einen freien Randstreifen 117, der sich entlang des Längsrands 115e erstreckt und der nicht mit dem Elektrodenmaterial 125 beladen ist. Durch spiralförmiges Aufwickeln kann der Elektroden-Separator-Verbund 104 in einen Wickel überführt werden, wie er in einer erfindungsgemäßen Zelle enthalten sein kann.

Die freien Randstreifen 117 und 121 sind in einigen bevorzugten Ausführungsformen beidseitig sowie zumindest bereichsweise mit einem elektrisch isolierenden Stützmaterial, beispielsweise mit einem keramischen Material wie Silizium- oder Aluminiumoxid, beschichtet.

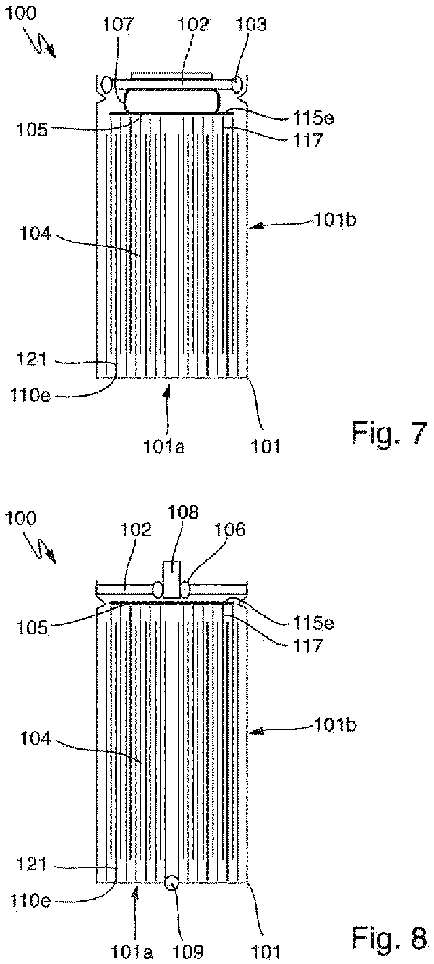

In **Fig.** 7 ist ist eine Zelle 100 mit einem Gehäuse aus einem ersten Gehäuseteil 101 und einem zweiten Gehäuseteil 102 dargestellt. In dem Gehäuse ist der Elektroden-Separator-Verbund 104 eingeschlossen. Das Gehäuse ist insgesamt zylindrisch ausgebildet, das Gehäuseteil 101 weist einen kreisrunden Boden 101a, einen hohlzylindrischen Mantel 101b und eine dem Boden 101a gegenüberliegende kreisrunde Öffnung auf. Das Gehäuseteil 102 dient zum Verschließen der kreisrunden Öffnung und ist als kreisrunder Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Boden 101a, eine rechteckige Seitenwand 101b und einen rechteckigen Querschnitt sowie eine rechteckige Öffnung, das Gehäuseteil 102 wäre zum Verschließen der rechteckigen Öffnung als rechteckiger Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Boden 101a des Gehäuseteils 101 und ist mit diesem mindestens über mehrere Abschnitte, bevorzugt über seine gesamte Länge, durch Verschweißung verbunden. Der Rand 115e des Kathodenstromkollektors 115 steht über seine gesamte Länge in unmittelbarem Kontakt mit der Kontaktplatte 105 und ist mit dieser mindestens über mehrere Abschnitte, bevorzugt über seine gesamte Länge, durch Verschweißung verbunden.

Die Kontaktplatte 105 ist wiederum über den elektrischen Leiter 107 elektrisch mit dem Gehäuseteil 102 verbunden. Bevorzugt besteht zwischen dem Leiter 107 und der Kontaktplatte 105 auf der einen und dem Leiter 107 und dem Gehäuseteil 102 auf deranderen Seite jeweils eine Schweißverbindung.

Der besseren Übersicht wegen sind - abgesehen von den Stromkollektoren 110 und 115 - keine weiteren Komponenten des Elektroden-Separator-Verbunds 104 (insbesondere Separatoren und Elektrodenmaterialien) dargestellt.

Die Gehäuseteile 101 und 102 sind durch die Dichtung 103 elektrisch voneinander isoliert. Das Gehäuse ist beispielsweise durch Bördelung verschlossen. Das Gehäuseteil 101 bildet den Minuspol und das Gehäuseteil 102 den Pluspol der Zelle 100.

In **Fig.** 8 ist eine Zelle 100 mit einem Gehäuse aus einem ersten Gehäuseteil 101 und einem zweiten Gehäuseteil 102 dargestellt. In dem Gehäuse ist der Elektroden-Separator-Verbund 104 eingeschlossen. Das Gehäuse ist insgesamt zylindrisch ausgebildet, das Gehäuseteil 101 weist einen kreisrunden Boden 101a, einen hohlzylindrischen Mantel 101b und eine dem Boden 101a gegenüberliegende kreisrunde Öffnung auf. Das Gehäuseteil 102 dient zum Verschließen der kreisrunden Öffnung und ist als kreisrunder Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Boden 101a, eine rechteckige Seitenwand 101b und einen rechteckigen Querschnitt sowie eine rechteckige Öffnung, das Gehäuseteil 102 wäre zum Verschließen der rechteckigen Öffnung als rechteckiger Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Boden 101a des Gehäuseteils 101 und ist mit diesem mindestens über mehrere Abschnitte, bevorzugt über seine gesamte Länge, durch Verschweißung verbunden. Der Rand 115e des Kathodenstromkollektors 115 steht über seine gesamte Länge in unmittelbarem Kontakt mit der Kontaktplatte 105 und ist mit dieser mindestens über mehrere Abschnitte, bevorzugt über seine gesamte Länge, durch Verschweißung verbunden.

Die Kontaktplatte 105 ist unmittelbar mit dem metallischen Polbolzen 108 verbunden, bevorzugt verschweißt. Dieser ist durch eine Durchbrechung in dem Gehäuseteil 102 aus dem Gehäuse herausgeführt und mittels derelektrischen Isolierung 106 gegen das Gehäuseteil 102 isoliert. Der Polbolzen 108 und die elektrische Isolierung 106 bilden gemeinsam eine Poldurchführung.

Der besseren Übersicht wegen sind - abgesehen von den Stromkollektoren 110 und 115 - auch hier keine weiteren Komponenten des Elektroden-Separator-Verbunds 104 (insbesondere Separatoren und Elektrodenmaterialien) dargestellt.

Im Boden 101a findet sich ein beispielsweise mittels Verlötung, Verschweißung oder Verklebung verschlossenes Loch 109, das beispielsweise zur Einbringung von Elektrolyt in das Gehäuse dienen kann. Alternativ hätte man zum gleichen Zweck auch ein Loch in das Gehäuseteil 102 einbringen können.

Das Gehäuseteil 102 ist in die kreisrunde Öffnung des Gehäuseteils 101 eingeschweißt. Die Gehäuseteile 101 und 102 weisen also dieselbe Polarität auf und bilden den Minuspol der Zelle 100. Der Polbolzen 108 bildet den Pluspol der Zelle 100.

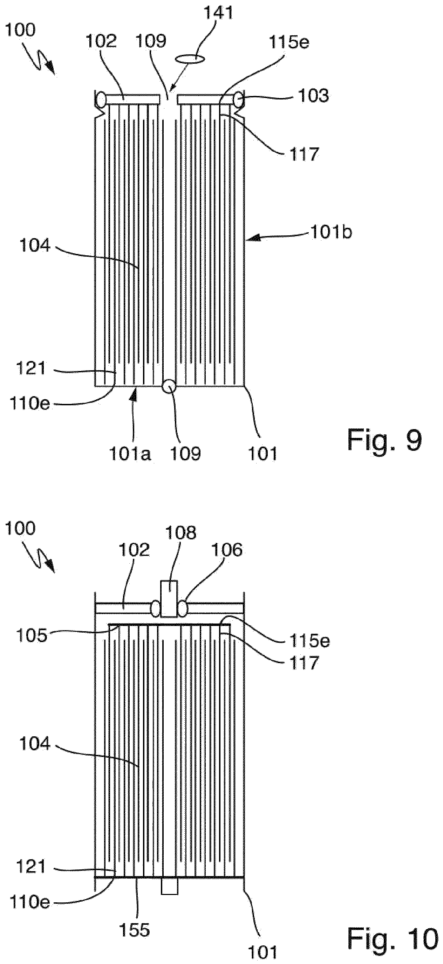

In **Fig. 9** ist eine Zelle 100 mit einem Gehäuse aus einem ersten Gehäuseteil 101 und einem zweiten Gehäuseteil 102 dargestellt. In dem Gehäuse ist der Elektroden-Separator-Verbund 104 eingeschlossen. Das Gehäuse ist insgesamt zylindrisch ausgebildet, das Gehäuseteil 101 weist einen kreisrunden Boden 101a, einen hohlzylindrischen Mantel 101b und eine dem Boden 101a gegenüberliegende kreisrunde Öffnung auf. Das Gehäuseteil 102 dient zum Verschließen der kreisrunden Öffnung und ist als kreisrunder Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Boden 101a, eine rechteckige Seitenwand 101b und einen rechteckigen Querschnitt sowie eine rechteckige Öffnung, das Gehäuseteil 102 wäre zum Verschließen der rechteckigen Öffnung als rechteckiger Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Boden 101a des Gehäuseteils 101 und ist mit diesem mindestens über mehrere Abschnitte, bevorzugt über seine gesamte Länge, durch Verschweißung verbunden. Der Rand 115e des Kathodenstromkollektors 115 steht über seine gesamte Länge in unmittelbarem Kontakt mit dem Gehäuseteil 102 und ist mit dieser mindestens über mehrere Abschnitte, bevorzugt über seine gesamte Länge, durch Verschweißung verbunden.

Der besseren Übersicht wegen sind - abgesehen von den Stromkollektoren 110 und 115 - auch hier keine weiteren Komponenten des Elektroden-Separator-Verbunds 104 (insbesondere Separatoren und Elektrodenmaterialien) dargestellt.

Im Boden 101a findetsich ein beispielsweise mittels Verlötung, Verschweißung oder Verklebungverschlossenes Loch 109, das beispielsweise zur Einbringung von Elektrolyt in das Gehäuse dienen kann. Ein weiteres Loch 109, das dem gleichen Zweck dienen kann, findet sich hier im Gehäuseteil 102. Bevorzugt wird diese mit dem Überdruckventil 141 verschlossen, das auf das Gehäuseteil 102 beispielsweise aufgeschweißt werden kann.

Die dargestellten Löcher 109 werden in der Regel nicht beide benötigt. In vielen Fällen weist die in Fig. 9 dargestellte Zelle 100 daher nur eines der beiden Löcher auf.

Die Gehäuseteile 101 und 102 sind durch die Dichtung 103 elektrisch voneinander isoliert. Das Gehäuse ist beispielsweise durch Bördelung verschlossen. Das Gehäuseteil 101 bildet den Minuspol und das Gehäuseteil 102 den Pluspol der Zelle 100.

In **Fig. 10** ist eine Zelle 100 mit einem Gehäuse aus einem ersten Gehäuseteil 101 und einem zweiten Gehäuseteil 102 und einem dritten Gehäuseteil 155 dargestellt. In dem Gehäuse ist der Elektroden-Separator-Verbund 104 eingeschlossen. Das Gehäuse ist insgesamt zylindrisch ausgebildet, das Gehäuseteil 101 ist hierbei als Hohlzylinder mit zwei stirnseitigen kreisrunden Öffnungen ausgebildet. Die Gehäuseteile 102 und 155 dienen zum Verschließen der kreisrunden Öffnungen und sind als kreisrunde Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Querschnitt sowie zwei rechteckige Öffnungen, die Gehäuseteile 102 und 155 wären zum Verschließen der rechteckigen Öffnungen als rechteckige Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Gehäuseteil 155 und ist mit diesem mindestens über mehrere Abschnitte, bevorzugt über seine gesamte Länge, durch Verschweißung verbunden. Das Gehäuseteil 155 fungiert damit auch als Kontaktplatte im Sinne der Erfindung. Der Rand 115e des Kathodenstromkollektors 115 steht über seine gesamte Länge in unmittelbarem Kontakt mit der Kontaktplatte 105 und ist mit dieser mindestens über mehrere Abschnitte, bevorzugt über seine gesamte Länge, durch Verschweißung verbunden.

Der besseren Übersicht wegen sind - abgesehen von den Stromkollektoren 110 und 115 - auch hier keine weiteren Komponenten des Elektroden-Separator-Verbunds 104 (insbesondere Separatoren und Elektrodenmaterialien) dargestellt.

Die Kontaktplatte 105 ist unmittelbar mit dem metallischen Polbolzen 108 verbunden, bevorzugt verschweißt. Dieser ist durch eine Durchbrechung in dem Gehäuseteil 102 aus dem Gehäuse herausgeführt und mittels der elektrischen Isolierung 106 gegen das Gehäuseteil 102 isoliert. Der Polbolzen 108 und die elektrische Isolierung 106 bilden gemeinsam eine Poldurchführung.

Im Gehäuseteil 102 findet sich ein beispielsweise mittels Verlötung, Verschweißung oderVerklebung verschlossenes Loch 109, das beispielsweise zur Einbringung von Elektrolyt in das Gehäuse dienen kann. Alternativ hätte man zum gleichen Zweck auch ein Loch in das Gehäuseteil 155 einbringen können.

Die Gehäuseteile 102 und 155 sind in die kreisrunden Öffnungen des Gehäuseteils 101 eingeschweißt. Die Gehäuseteile 101, 102 und 155 weisen also dieselbe Polarität auf und bilden den Minuspol der Zelle 100. Der Polbolzen 108 bildet den Pluspol der Zelle 100.

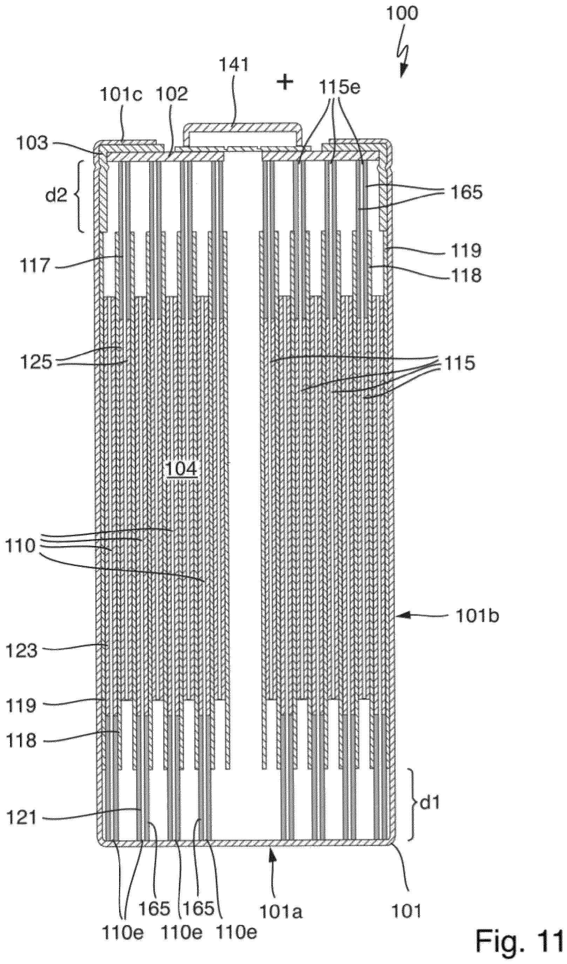

In **Fig.11** ist eine Zelle 100 mit einem Gehäuse aus einem ersten Gehäuseteil 101 und einem zweiten Gehäuseteil 102 dargestellt. In dem Gehäuse ist der Elektroden-Separator-Verbund 104 eingeschlossen. Das Gehäuse ist insgesamt zylindrisch ausgebildet, das Gehäuseteil 101 weist einen kreisrunden Boden 101a, einen hohlzylindrischen Mantel 101b und eine dem Boden 101a gegenüberliegende kreisrunde Öffnung auf. Das Gehäuseteil 102 dient zum Verschließen der kreisrunden Öffnung und ist als kreisrunder Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Boden 101a, eine rechteckige Seitenwand 101b und einen rechteckigen Querschnitt sowie eine rechteckige Öffnung, das Gehäuseteil 102 wäre zum Verschließen der rechteckigen Öffnung als rechteckiger Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Boden 101a des Gehäuseteils 101 und ist mit diesem mindestens über mehrere Abschnitte, bevorzugt über seine gesamte Länge, durch Verschweißung verbunden.

Der Rand 115e des Kathodenstromkollektors 115 steht über seine gesamte Länge in unmittelbarem Kontakt mit dem Gehäuseteil 102 und ist mit dieser mindestens über mehrere Abschnitte, bevorzugt über seine gesamte Länge, durch Verschweißung verbunden. Das Gehäuseteil 102 dient hier somit gleichzeitig als Kontaktplatte.

Der Anodenstromkollektor 110 ist beidseitig mit einer Schicht aus negativem Elektrodenmaterial 123 beladen, weist jedoch einen freien Randstreifen 121 auf, der sich entlang des Längsrands 110e erstreckt und der nicht mit dem Elektrodenmaterial 123 beladen ist. Stattdessen ist der freie Randstreifen 121 beidseitig mit einem keramischen Stützmaterial 165 beschichtet.

Der Kathodenstromkollektor 115 ist beidseitig mit einer Schicht aus negativem Elektrodenmaterial 125 beladen, weist jedoch einen freien Randstreifen 117 auf, der sich entlang des Längsrands 115e erstreckt und der nicht mit dem Elektrodenmaterial 125 beladen ist. Stattdessen ist der freie Randstreifen 117 beidseitig mit einem keramischen Stützmaterial 165 beschichtet.

Die Stromkollektoren 110 und 115 können in bevorzugten Ausführungsformen in den Bereichen, in denen sie mit den Elektrodenmaterialien 123 und 125 beladen sind, perforiert sein, beispielsweise wie dies in Fig. 1 und Fig. 2 dargestellt ist.

Der Elektroden-Separator-Verbund 104 weist zwei Stirnseiten auf, die durch die Längsränder 118a und 119a sowie 118b und 119b der Separatoren 118 und 119 gebildet werden. Aus diesen Stirnseiten ragen die Längsränder der Stromkollektoren 110 und 115 hervor. Die entsprechenden Überstände sind mit d1 und d2 bezeichnet.

Die Separatoren 118 und 119 weisen entweder jeweils mindestens eine Oberfläche auf, die eine keramische Beschichtung aufweist, oder sie umfassen jeweils ein keramisches Füllmaterial, das ihre Beständigkeit gegenüber thermischen Belastungen verbessert.

Im Gehäuseteil 102 findet sich ein Loch 109, das beispielsweise zur Einbringung von Elektrolyt in das Gehäuse dienen kann. Das Loch ist mit dem Überdruckventil 141 verschlossen, das mit dem Gehäuseteil 102 beispielsweise durch Verschweißung verbunden ist.

Die Gehäuseteile 101 und 102 sind durch die Dichtung 103 elektrisch voneinander isoliert. Das Gehäuse ist durch Bördelung verschlossen. Hierzu ist der Öffnungsrand 101c des Gehäuseteils radial nach innen umgebogen. Das Gehäuseteil 101 bildet den Minuspol und das Gehäuseteil 102 den Pluspol der Zelle 100.

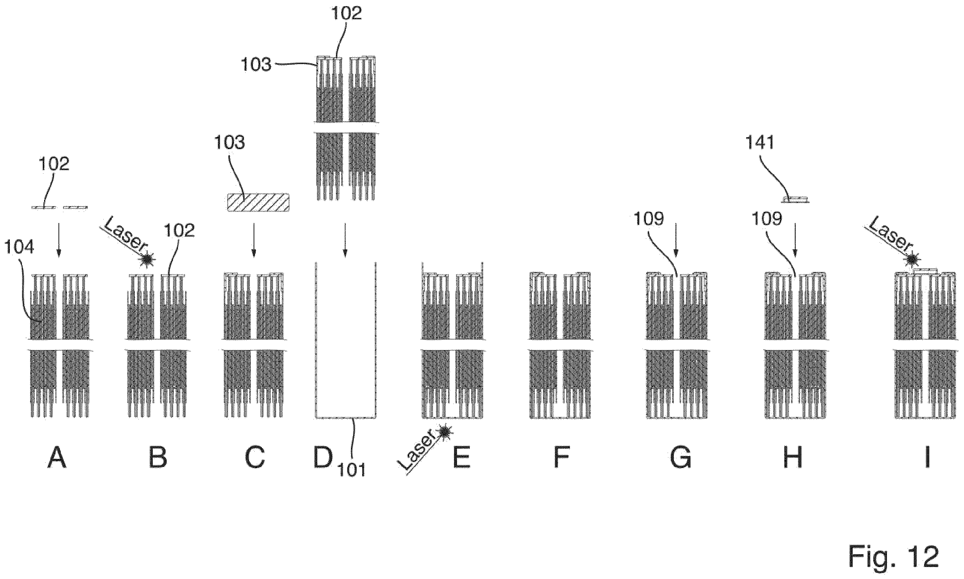

Zur Herstellung der in Fig. 11 dargestellten Zelle kann gemäß **Fig. 12** vorgegangen werden, die einzelnen Verfahrensschritte A bis I sind im Folgenden beschrieben. Zunächst wird der Elektroden-Separator-Verbund 104 bereitgestellt, auf dessen obere Stirnseite das als Kontaktplatte dienende Gehäuseteil 102 aufgelegt wird. Dieses wird im Schritt B mit dem Längsrand 115e des Kathodenstromkollektors 115 verschweißt. Im Schritt C wird die umlaufende Dichtung 103 auf den Rand des Gehäuseteils 102 aufgezogen. Mit diesem wird im Schritt D der Elektroden-Separator-Verbund 104 in das Gehäuseteil 101 soweit eingeschoben, bis der Längsrand 110e des Anodenstromkollektors 110 in unmittelbarem Kontakt mit dem Boden 101a des Gehäuseteils 101 steht. Im Schritt E wird dieser mit dem Boden 101a des Gehäuseteils 101 verschweißt. Im Schritt F erfolgt durch Bördelung der Verschluss des Gehäuses. Hierzu wird der der Öffnungsrand 101c des Gehäuseteils 101 radial nach innen umgebogen. Im Schritt G erfolgt eine Befüllung des Gehäuses mit Elektrolyt, der durch die Öffnung 109 in das Gehäuse eindosiert wird. Die Öffnung 109 wird in den Schritten H und I mittels des Überdruckventils 141, das auf das Gehäuseteil 102 aufgeschweißt wird, verschlossen.

Der Elektroden-Separator-Verbund 104 kann beispielsweise eine positive Elektrode aus 95 Gew.-% NMCA, 2 Gew.-% eines Elektrodenbinders und 3 Gew.-% Ruß als Leitmittel aufweisen.

Die negative Elektrode kann in einigen bevorzugten Ausführungsformen beispielsweise 70 Gew.-% Silizium, 25 Gew.-% Graphit, 2 Gew.-% eines Elektrodenbinders und 3 Gew.-% Ruß als Leitmittel umfassen. Als Elektrolyt kann eine 2 M Lösung von LiPF6 in THF/mTHF (1:1) oder eine 1.5 M Lösung von LiPF6 in FEC/EMC (3:7) mit 2 Gew.-% VC eingesetzt werden.

In vielen weiteren bevorzugten Ausführungsformen kommen Anoden zum Einsatz, die einen hohen Anteil an einem kohlenstoffbasierten Speichermaterial und einen Silizium/Siliziumoxid- Anteil < 10 Gew.-% aufweisen. In diesen Fällen werden vielfach klassische Elektrolyten eingesetzt, bei den ein Leitsalz in einem Gemisch organischer Carbonate gelöst ist.

## Patentansprüche

1. Lithium-Ionen-Zelle (100) mit den Merkmalen
a. die Zelle umfasst einen bandförmigen Elektroden-Separator-Verbund (104) mit der Sequenz Anode (120) / Separator (118) / Kathode (130),
b. die Anode (120) umfasst einen bandförmigen Anodenstromkollektor (110) mit einem ersten Längsrand (110e) und einem zweiten Längsrand und zwei Endstücken,
c. der Anodenstromkollektor (110) weist einen bandförmigen Hauptbereich (122), der mit einer Schicht aus negativem Elektrodenmaterial (123) beladen ist, sowie einen freien Randstreifen (121), der sich entlang des ersten Längsrands (110e) erstreckt und der nicht mit dem Elektrodenmaterial (123) beladen ist, auf,
d. die Kathode (130) umfasst einen bandförmigen Kathodenstromkollektor (115) mit einem ersten Längsrand (115e) und einem zweiten Längsrand und zwei Endstücken,
e. der Kathodenstromkollektor (115) weist einen bandförmigen Hauptbereich (116), der mit einer Schicht aus positivem Elektrodenmaterial (125) beladen ist, sowie einen freien Randstreifen (117), der sich entlang des ersten Längsrands (115e) erstreckt und der nicht mit dem Elektrodenmaterial (125) beladen ist, auf,
f. der Elektroden-Separator-Verbund (104) liegt in Form eines Wickels mit zwei endständigen Stirnseiten vor oder ist Bestandteil eines Stapels, der aus zwei oder mehr identischen Elektroden-Separator-Verbünden (104) gebildet ist und gleichfalls zwei endständige Seiten aufweist,
g. die Elektroden-Separator-Verbund (104) ist, gegebenenfalls mitsamt dem oder den weiteren identischen Elektroden-Separator-Verbünden des Stapels, von einem Gehäuse umschlossen,
h. die Anode (120) und die Kathode (130) sind innerhalb des Elektroden-Separator-Verbunds (104) versetzt angeordnet, so dass der erste Längsrand (110e) des Anodenstromkollektors (110) aus einer der endständigen Stirnseiten oder Seiten des Stapels und der erste Längsrand (115e) des Kathodenstromkollektors (115) aus der anderen der endständigen Stirnseiten oder Seiten des Stapels austritt,
h. die Zelle weist ein metallisches Kontaktelement (101a, 102, 155) auf, mit der einer der ersten Längsränder (110e, 115e) in unmittelbarem Kontakt steht, und
i. das Kontaktelement (101a, 102, 155) ist mit diesem Längsrand (110e, 115e) durch Verschweißung verbunden,
sowie dem zusätzlichen kennzeichnenden Merkmal
j. der Separator (118) umfasst mindestens ein anorganisches Material, das seine Widerstandsfähigkeit gegenüber thermischen Belastungen verbessert.

2. Zelle nach Anspruch 1 mit den folgenden zusätzlichen Merkmalen:
a. Der Elektroden-Separator-Verbund (104) umfasst zusätzlich einen zweiten Separator (119).
b. Der Separator (118) und der Separator (119) sind identisch ausgebildet.
c. Der Elektroden-Separator-Verbund (104) weist die Sequenz Anode (120) / Separator (118) / Kathode (130) / Separator (119) oder die Sequenz Separator (119) / Anode (120) / Separator (118) / Kathode (130) auf.

3. Zelle nach Anspruch 1 oder nach Anspruch 2 mit den folgenden zusätzlichen Merkmalen:
a. Der Separator (118) und/oder der Separator (119) ist ein bandförmiges Kunststoffsubstrat mit einer Dicke im Bereich von 5 µm bis 50 µm, bevorzugt im Bereich von 7 µm bis 12 µm, sowie mit einem ersten und einem zweiten Längsrand und zwei Endstücken.
b. Die Längsränder des Separators (118) und/oder des Separators (119) bilden die endständigen Seiten des Stapels oder die Stirnseiten des Elektroden-Separator-Verbunds (104).

4. Zelle nach einem der vorhergehenden Ansprüche mit dem folgenden zusätzlichen Merkmal:
a. Das mindestens eine anorganische Material ist als partikuläres Füllmaterial in dem Separator (118) und/oder dem Separator (119) enthalten.

5. Zelle nach einem der vorhergehenden Ansprüche mit dem folgenden zusätzlichen Merkmal:
a. Das mindestens eine anorganische Material liegt als Beschichtung auf einer Oberfläche des Separators (118) und/oder des Separators (119) vor.

6. Zelle nach einem der vorhergehenden Ansprüche mit mindestens einem der folgenden zusätzlichen Merkmale:
a. Das mindestens eine anorganische Material ist oder umfasst ein elektrisch isolierendes Material.
b. Das mindestens eine anorganische Material ist oder umfasst mindestens ein Material aus der Gruppe mit keramischem Material, glaskeramischem Material und Glas.
c. Das mindestens eine anorganische Material ist oder umfasst ein Lithiumionen leitendes keramisches Material.
d. Das mindestens eine anorganische Material ist oder umfasst ein oxidisches Material, insbesondere ein Metalloxid.
e. Bei dem keramischen oder dem oxidischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂) oder um Titancarbonitrid (TiCN).

7. Zelle nach einem der vorhergehenden Ansprüche mit mindestens einem der folgenden zusätzlichen Merkmale:
a. Der Separator (118) und/oder der Separator (119) umfasst das mindestens eine anorganische Material lediglich bereichsweise.
b. Der Separator (118) und/oder der Separator (119) weist entlang des ersten und/oder des zweiten Längsrands einen Randstreifen auf, in dem er das mindestens eine anorganische Material als Beschichtung und/oder als partikuläres Füllmaterial umfasst.
c. Der Separator (118) und/oder der Separator (119) weist einen bandförmigen Hauptbereich auf, in dem er frei von dem mindestens einen anorganischen Material ist.

8. Zelle nach einem der vorhergehenden Ansprüche mit dem folgenden zusätzlichen Merkmal:
a. Der freie Randstreifen (121) des Anodenstromkollektors (110) und/oder der freie Randstreifen (117) des Kathodenstromkollektors (115) ist mit einem Stützmaterial (165) beschichtet, das sich von dem auf dem jeweiligen Stromkollektor angeordneten Elektrodenmaterial (123) oder (125) unterscheidet.

9. Zelle nach Anspruch 8 mit mindestens einem der folgenden zusätzlichen Merkmale:
a. Der freie Randstreifen (121) des Anodenstromkollektors (110) und/oder der freie Randstreifen (117) des Kathodenstromkollektors (115) umfasst einen ersten Teilbereich und einen zweiten Teilbereich, wobei der erste Teilbereich mit dem Stützmaterial (165) beschichtet ist, während der zweite Teilbereich unbeschichtet ist.
b. Der erste Teilbereich und der zweite Teilbereich weisen jeweils die Form einer Linie oder eines Streifens auf und verlaufen parallel zueinander.
c. Der erste Teilbereich ist zwischen dem bandförmigen Hauptbereich des Anodenstromkollektors (110) oder des Kathodenstromkollektors (115) und dem zweiten Teilbereich angeordnet.

10. Zelle nach Anspruch 8 mit dem folgenden zusätzlichen Merkmal:
a. Der freie Randstreifen (121) des Anodenstromkollektors (110) und/oder der freie Randstreifen (117) des Kathodenstromkollektors (115) ist bis hin zum ersten Längsrand (110e) mit dem Stützmaterial (165) beschichtet.

11. Zelle nach einem der Ansprüche 8 bis 10 mit mindestens einem der folgenden zusätzlichen Merkmale:
a. Der Separator (118) und/oder der Separator (119) umfasst das mindestens eine anorganische Material lediglich bereichsweise.
b. Der Separator (118) und/oder der Separator (119) umfasst das mindestens eine anorganische Material in einem Bereich, der in dem Elektroden-Separator-Verbund (104) eine Grenze zwischen dem Stützmaterial und dem jeweils angrenzenden Elektrodenmaterial abdeckt.
